# EUROPEAN PATENT APPLICATION

(11) **EP 4 838 941 A1**
(43) Date of publication of application: **11.11.2026**
(21) Application number: 25747911.3
(22) Date of filing: 26.01.2025
(51) Int. Cl.: H04W 24/08

(54) **CSI MEASUREMENT METHOD AND APPARATUS USED IN NODE FOR WIRELESS COMMUNICATION**

(30) Priority: 02.02.2024 CN 202410153520
(71) Applicant: Honor Device Co., Ltd., Shenzhen, Guangdong 518040 (CN)
(72) Inventor: WU, Lu, Shenzhen, Guangdong 518040 (CN); ZHANG, Xiaobo, Shenzhen, Guangdong 518040 (CN)
(74) Representative: Goddar, Heinz J.
(86) International application number: PCT/CN2025/075063
(87) International publication number: WO 2025/162343

(57) **Abstract**

This application discloses a CSI measurement method and apparatus in a node used for wireless communication. A first node receives a first CSI reporting configuration, where the first CSI reporting configuration indicates a first CSI-RS resource set for channel measurement, and the first CSI-RS resource set includes a plurality of CSI-RS resources; and the first CSI reporting configuration is used to configure reporting for CSI with P ports, where P is a positive integer greater than 1; and sends first CSI, where the first CSI is the CSI for P ports configured by the first CSI reporting configuration. The first CSI includes a CQI, and a target power control offset is a ratio that is of PDSCH EPRE to CSI-RS EPRE and that is used for calculating the CQI in the first CSI; and the target power control offset depends on whether P is greater than the number of ports of any CSI-RS resource in the first CSI-RS resource set. The foregoing method can select an appropriate ratio of PDSCH EPRE to CSI-RS EPRE.

## Description

This application claims priority to Chinese Patent Application No. 202410153520.X, filed with the China National Intellectual Property Administration on February 02, 2024 and entitled "CSI MEASUREMENT METHOD AND APPARATUS IN NODE USED FOR WIRELESS COMMUNICATION", which is incorporated herein by reference in its entirety.

### TECHNICAL FIELD

This application relates to a transmission method and apparatus in a wireless communication system, and in particular, to a CSI (Channel State Information, channel state information) measurement solution and apparatus in a wireless communication system.

### BACKGROUND

In a wireless communication system supporting MIMO (Multiple-Input Multiple-Output, multiple-input multiple-output), it is a common technology for a UE (User Equipment, user equipment) to generate and feed back CSI (Channel Status Information, channel state information) based on channel and/or interference measurement to assist a base station in performing multi-antenna processing. In a 5G (the 5th generation, the 5th generation) NR (new radio, new radio) system, in order for a base station to obtain accurate CSI, the base station configures, for a UE, NZP CSI-RS resources for channel measurement and CSI-IM resources for interference measurement. In addition, NZP CSI-RS resources for interference measurement can be further configured. In existing 3GPP Release (Release) 18 and earlier standards, the number of ports of a CSI-RS resource for channel measurement configured by the base station for the UE is the number of ports for CSI fed back.

To address coverage and to achieve greater spectral efficiency, a larger antenna array with more antennas has attracted great interest in the industry. To this end, the "NR MIMO Phase 5" work item (Work Item, WI) was approved at 3GPP (the 3rd Generation Partnership Project, the 3rd Generation Partnership Project) RAN meeting #94. A design of measurement and reporting of CSI for a larger quantity of CSI-RS ports (up to 128) is a key issue to be addressed.

In addition, for future wireless communication systems (such as 6G), using an ultra-large antenna array is also an effective technology to address coverage and improve spectral efficiency. How to design measurement and reporting of CSI for an ultra-large quantity of CSI-RS ports (a maximum value is equal to or greater than 128) is a key issue to be addressed.

### SUMMARY

In existing systems, a UE determines CSI reporting based on a CSI (Channel State Information, channel state information) reporting configuration and RS (Reference Signal, reference signal) resources. In calculation of CQI (Channel quality indicator, channel quality indicator), an assumed (assumed) ratio of PDSCH (Physical Downlink Shared Channel, physical downlink shared channel) EPRE (Energy per resource element, energy per resource element) to CSI-RS EPRE is used, and determination of this ratio is a key issue.

To address the foregoing issue, this application discloses a solution. It should be noted that although a 5G cellular network is used as an example in the foregoing description, this application is also applicable to other scenarios such as a V2X (Vehicle-to-Everything) scenario, and achieves similar technical effects as in the cellular network. Further, using a unified design solution for different scenarios (including but not limited to a 5G cellular network, V2X, future mobile communication systems such as 6G and 7G) also helps reduce hardware complexity and costs. In a case of no conflict, embodiments in any node of this application and features in the embodiments may be applied to any other node, and vice versa. In a case of no conflict, embodiments of this application and features in the embodiments may be arbitrarily combined with each other.

In particular, for interpretation of terminology (Terminology), nouns, functions, and variables in this application (unless otherwise explicitly stated), refer to the definitions in the TS36 series, the TS38 series, and the TS37 series in the 3GPP specification protocol. If necessary, refer to TS38.211, TS38.212, TS38.213, TS38.214, TS38.215, TS38.321, TS38.331, TS38.305, TS38.304, and TS37.355 in the 3GPP standard to assist in understanding this application.

This application discloses a method in a first node used for wireless communication, including:
receiving a first CSI reporting configuration, where the first CSI reporting configuration indicates a first CSI-RS resource set for channel measurement, and the first CSI-RS resource set includes a plurality of CSI-RS resources; and the first CSI reporting configuration is used to configure reporting for CSI with P ports, where P is a positive integer greater than 1; and
sending first CSI, where the first CSI is the CSI for P ports configured by the first CSI reporting configuration.

The first CSI includes a CQI, and a target power control offset is a ratio that is of PDSCH EPRE to CSI-RS EPRE and that is used for calculating the CQI in the first CSI; and the target power control offset depends on whether P is greater than the number of ports of any CSI-RS resource in the first CSI-RS resource set.

In an embodiment, a problem to be resolved by this application includes: how to determine a ratio that is of PDSCH EPRE to CSI-RS EPRE and that is assumed in CQI calculation.

In an embodiment, in the foregoing method, a ratio that is of PDSCH EPRE to CSI-RS EPRE and that is assumed in CQI calculation is flexibly adjusted based on the number of ports for CSI and the number of ports of a CSI-RS resource.

In an embodiment, an advantage of using the foregoing method is that not only a case in which the number of ports for the CSI is equal to the number of ports of the configured CSI-RS resource in the current standard is supported, but also a case in which the number of ports for the CSI is greater than the number of ports of the configured CSI-RS resource is supported.

In an embodiment, an advantage of using the foregoing method is that a system design is simplified.

In an embodiment, an advantage of using the foregoing method is that compatibility with the standard is good and a modification to the standard is slight.

In an embodiment, an advantage of using the foregoing method is that accuracy of CSI is improved.

In an embodiment, an advantage of using the foregoing method is that transmission efficiency is improved.

In an embodiment, an advantage of using the foregoing method is that a transmission capacity is increased.

In an embodiment, an advantage of using the foregoing method is that system performance is improved.

According to an aspect of this application, the CSI for P ports includes a PMI for P ports, where the CQI in the first CSI is calculated conditioned on at least the PMI in the first CSI.

According to an aspect of this application, when P is equal to the number of ports of one CSI-RS resource in the first CSI-RS resource set, the first CSI indicates a first CSI-RS resource, where the first CSI-RS resource is a CSI-RS resource in the first CSI-RS resource set; or when P is greater than the number of ports of any CSI-RS resource in the first CSI-RS resource set, the first CSI indicates a first CSI-RS resource group, where the first CSI-RS resource group includes a plurality of CSI-RS resources in the first CSI-RS resource set, and a total number of ports of all CSI-RS resources in the first CSI-RS resource group is equal to the P.

In an embodiment, an advantage of using the foregoing method is that a design of a CSI-RS resource is simplified.

In an embodiment, an advantage of using the foregoing method is that designing a CSI-RS resource with a larger number of ports (such as 128 or more) is avoided, but measurement and reporting of CSI with a larger number of ports (such as 128 or more) are achieved.

In an embodiment, an advantage of using the foregoing method is that combining a plurality of CSI-RS resources into one CSI-RS resource with a larger number of ports (such as 128 or more) for measuring channel information with a larger number of ports (for example, up to 128 or larger than 128) is supported.

In an embodiment, an advantage of using the foregoing method is that a system design is simplified.

In an embodiment, an advantage of using the foregoing method is that compatibility with the standard is good and a modification to the standard is slight.

In an embodiment, an advantage of using the foregoing method is that accuracy of CSI is improved.

In an embodiment, an advantage of using the foregoing method is that transmission efficiency is improved.

In an embodiment, an advantage of using the foregoing method is that a transmission capacity is increased.

In an embodiment, an advantage of using the foregoing method is that system performance is improved.

According to an aspect of this application, when P is greater than the number of ports of any CSI-RS resource in the first CSI-RS resource set, ratios of PDSCH EPRE to CSI-RS EPRE that are respectively configured for any two CSI-RS resources in the first CSI-RS resource group are the same, the first CSI-RS resource group includes a plurality of CSI-RS resources in the first CSI-RS resource set, and the target power control offset is equal to a ratio that is of PDSCH EPRE to CSI-RS EPRE and that is configured for any CSI-RS resource in the first CSI-RS resource group.

In an embodiment, an advantage of using the foregoing method is that a system design is simplified.

In an embodiment, an advantage of using the foregoing method is that compatibility with the standard is good and a modification to the standard is slight.

According to an aspect of this application, when P is equal to the number of ports of one CSI-RS resource in the first CSI-RS resource set, the target power control offset is a first power control offset; or when P is greater than the number of ports of any CSI-RS resource in the first CSI-RS resource set, the target power control offset is a second power control offset.

In an embodiment, an advantage of using the foregoing method is that not only a case in which the number of ports for the CSI is equal to the number of ports of the configured CSI-RS resource in the current standard is supported, but also a case in which the number of ports for the CSI is greater than the number of ports of the configured CSI-RS resource is supported.

In an embodiment, an advantage of using the foregoing method is that a system design is simplified.

In an embodiment, an advantage of using the foregoing method is that compatibility with the standard is good and a modification to the standard is slight.

In an embodiment, an advantage of using the foregoing method is that accuracy of CSI is improved.

In an embodiment, an advantage of using the foregoing method is that transmission efficiency is improved.

In an embodiment, an advantage of using the foregoing method is that a transmission capacity is increased.

In an embodiment, an advantage of using the foregoing method is that system performance is improved.

According to an aspect of this application, the first power control offset and the second power control offset are respectively indicated by two IEs, the IE indicating the first power control offset is used to configure a first CSI-RS resource, and the IE indicating the second power control offset is different from any IE used to configure a CSI-RS resource.

In an embodiment, an advantage of using the foregoing method is that a system design is simplified.

In an embodiment, an advantage of using the foregoing method is that compatibility with the standard is good and a modification to the standard is slight.

According to an aspect of this application, each CSI-RS resource in the first CSI-RS resource set is configured with a ratio of PDSCH EPRE to CSI-RS EPRE; when P is greater than the number of ports of any CSI-RS resource in the first CSI-RS resource set, a first value set includes a ratio that is of PDSCH EPRE to CSI-RS EPRE and that is configured for each CSI-RS resource in the first CSI-RS resource group, and the first CSI-RS resource group includes a plurality of CSI-RS resources in the first CSI-RS resource set; and the second power control offset is a value in the first value set, or the second power control offset depends on the first value set.

In an embodiment, an advantage of using the foregoing method is that a system design is simplified.

In an embodiment, an advantage of using the foregoing method is that compatibility with the standard is good and a modification to the standard is slight.

This application discloses a method in a second node used for wireless communication, including:
sending a first CSI reporting configuration, where the first CSI reporting configuration indicates a first CSI-RS resource set for channel measurement, and the first CSI-RS resource set includes a plurality of CSI-RS resources; and the first CSI reporting configuration is used to configure reporting for CSI with P ports, where P is a positive integer greater than 1; and
receiving first CSI, where the first CSI is the CSI for P ports configured by the first CSI reporting configuration.

The first CSI includes a CQI, and a target power control offset is a ratio that is of PDSCH EPRE to CSI-RS EPRE and that is used for calculating the CQI in the first CSI; and the target power control offset depends on whether P is greater than the number of ports of any CSI-RS resource in the first CSI-RS resource set.

According to an aspect of this application, the CSI for P ports includes a PMI for P ports, where the CQI in the first CSI is calculated conditioned on at least the PMI in the first CSI.

According to an aspect of this application, when P is equal to the number of ports of one CSI-RS resource in the first CSI-RS resource set, the first CSI indicates a first CSI-RS resource, where the first CSI-RS resource is a CSI-RS resource in the first CSI-RS resource set; or when P is greater than the number of ports of any CSI-RS resource in the first CSI-RS resource set, the first CSI indicates a first CSI-RS resource group, where the first CSI-RS resource group includes a plurality of CSI-RS resources in the first CSI-RS resource set, and a total number of ports of all CSI-RS resources in the first CSI-RS resource group is equal to the P.

According to an aspect of this application, when P is greater than the number of ports of any CSI-RS resource in the first CSI-RS resource set, ratios of PDSCH EPRE to CSI-RS EPRE that are respectively configured for any two CSI-RS resources in the first CSI-RS resource group are the same, the first CSI-RS resource group includes a plurality of CSI-RS resources in the first CSI-RS resource set, and the target power control offset is equal to a ratio that is of PDSCH EPRE to CSI-RS EPRE and that is configured for any CSI-RS resource in the first CSI-RS resource group.

According to an aspect of this application, when P is equal to the number of ports of one CSI-RS resource in the first CSI-RS resource set, the target power control offset is a first power control offset; or when P is greater than the number of ports of any CSI-RS resource in the first CSI-RS resource set, the target power control offset is a second power control offset.

According to an aspect of this application, the first power control offset and the second power control offset are respectively indicated by two IEs, the IE indicating the first power control offset is used to configure a first CSI-RS resource, and the IE indicating the second power control offset is different from any IE used to configure a CSI-RS resource.

According to an aspect of this application, each CSI-RS resource in the first CSI-RS resource set is configured with a ratio of PDSCH EPRE to CSI-RS EPRE; when P is greater than the number of ports of any CSI-RS resource in the first CSI-RS resource set, a first value set includes a ratio that is of PDSCH EPRE to CSI-RS EPRE and that is configured for each CSI-RS resource in the first CSI-RS resource group, and the first CSI-RS resource group includes a plurality of CSI-RS resources in the first CSI-RS resource set; and the second power control offset is a value in the first value set, or the second power control offset depends on the first value set.

This application discloses a first node device used for wireless communication, including:
a first receiver, receiving a first CSI reporting configuration, where the first CSI reporting configuration indicates a first CSI-RS resource set for channel measurement, and the first CSI-RS resource set includes a plurality of CSI-RS resources; and the first CSI reporting configuration is used to configure reporting for CSI with P ports, where P is a positive integer greater than 1; and
a first transmitter, sending first CSI, where the first CSI is the CSI for P ports configured by the first CSI reporting configuration.

The first CSI includes a CQI, and a target power control offset is a ratio that is of PDSCH EPRE to CSI-RS EPRE and that is used for calculating the CQI in the first CSI; and the target power control offset depends on whether P is greater than the number of ports of any CSI-RS resource in the first CSI-RS resource set.

This application discloses a second node device used for wireless communication, including:
a second transmitter, sending a first CSI reporting configuration, where the first CSI reporting configuration indicates a first CSI-RS resource set for channel measurement, and the first CSI-RS resource set includes a plurality of CSI-RS resources; and the first CSI reporting configuration is used to configure reporting for CSI with P ports, where P is a positive integer greater than 1; and
a second receiver, receiving first CSI, where the first CSI is the CSI for P ports configured by the first CSI reporting configuration.

The first CSI includes a CQI, and a target power control offset is a ratio that is of PDSCH EPRE to CSI-RS EPRE and that is used for calculating the CQI in the first CSI; and the target power control offset depends on whether P is greater than the number of ports of any CSI-RS resource in the first CSI-RS resource set.

In an embodiment, compared with a conventional solution, this application has the following advantages:
- a ratio that is of PDSCH EPRE to CSI-RS EPRE and that is assumed in CQI calculation is flexibly adjusted based on the number of ports for CSI and the number of ports of a CSI-RS resource;
- a design of a CSI-RS resource is simplified;
- designing a CSI-RS resource with a large number of ports (such as 128 or more) is avoided;
- measurement and reporting of CSI with a larger number of ports (such as 128 or more) can be achieved when a maximum number of ports of a CSI-RS resource supported by the current standard is unchanged;
- combining a plurality of CSI-RS resources into one CSI-RS resource with a larger number of ports (such as 128 or more) for measuring channel information with a larger number of ports (for example, up to 128 or larger than 128) is supported;
- a system design is simplified;
- compatibility with the standard is good and a modification to the standard is slight;
- accuracy of CSI is improved;
- transmission efficiency is improved;
- a transmission capacity is increased; and
- system performance is improved.

### BRIEF DESCRIPTION OF DRAWINGS

To describe the technical solutions in embodiments of the present invention or the conventional technology more clearly, the following briefly describes the accompanying drawings required for describing the embodiments or the conventional technology. Clearly, the accompanying drawings in the following description show some embodiments of the present invention, and a person of ordinary skill in the art may still derive other drawings from these accompanying drawings without creative efforts.

Other features, objectives, and advantages of this application become clearer by reading detailed descriptions of non-limiting embodiments with reference to the following drawings:
FIG. 1 is a flowchart of a first CSI reporting configuration and first CSI according to an embodiment of this application;
FIG. 2 is a schematic diagram of a network architecture according to an embodiment of this application;
FIG. 3 is a schematic diagram of an embodiment of radio protocol architectures of a user plane and a control plane according to an embodiment of this application;
FIG. 4 is a schematic diagram of a first communication device and a second communication device according to an embodiment of this application;
FIG. 5 is a flowchart of wireless transmission according to an embodiment of this application;
FIG. 6 is a schematic diagram of CSI for p ports according to an embodiment of this application;
FIG. 7 is a schematic diagram of a relationship between first CSI and P according to an embodiment of this application;
FIG. 8 is a schematic diagram of a relationship between a target power control offset and P according to an embodiment of this application;
FIG. 9 is a schematic diagram of a relationship between a target power control offset and P according to another embodiment of this application;
FIG. 10 is a schematic diagram of a second power control offset according to an embodiment of this application;
FIG. 11 is a schematic diagram of a second power control offset according to another embodiment of this application;
FIG. 12 is a schematic diagram of a second power control offset according to another embodiment of this application;
FIG. 13 is a block diagram of a structure of a processing apparatus in a first node device according to an embodiment of this application; and
FIG. 14 is a block diagram of a structure of a processing apparatus in a second node device according to an embodiment of this application.

### DESCRIPTION OF EMBODIMENTS

The technical solutions of this application are further described in detail below with reference to the accompanying drawings. It should be noted that, in a case of no conflict, embodiments of this application and features in the embodiments may be arbitrarily combined with each other.

### Embodiment 1

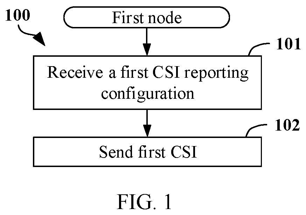

Embodiment 1 illustrates a flowchart of a first CSI reporting configuration and first CSI according to an embodiment of this application, as shown in FIG. 1. In 100 shown in FIG. 1, each block represents one step.

In Embodiment 1, the first node in this application receives a first CSI reporting configuration in step 101; and sends first CSI in step 102. The first CSI reporting configuration indicates a first CSI-RS resource set for channel measurement, and the first CSI-RS resource set includes a plurality of CSI-RS resources; and the first CSI reporting configuration is used to configure reporting for CSI with P ports, where P is a positive integer greater than 1. The first CSI is the CSI for P ports configured by the first CSI reporting configuration. The first CSI includes a CQI, and a target power control offset is a ratio that is of PDSCH EPRE to CSI-RS EPRE and that is used for calculating the CQI in the first CSI; and the target power control offset depends on whether P is greater than the number of ports of any CSI-RS resource in the first CSI-RS resource set.

Typically, any CSI-RS resource in the first CSI-RS (Channel state information reference signal, channel state information reference signal) resource set is an NZP (Non-Zero Power, non-zero power) CSI-RS resource.

In an embodiment, the first CSI (Channel Status Information, channel state information) reporting configuration is carried by higher layer signaling.

In an embodiment, the first CSI reporting configuration is carried by RRC signaling.

In an embodiment, the first CSI reporting configuration includes one IE (Information Element, information element).

In an embodiment, the first CSI reporting configuration includes one or more IEs.

In an embodiment, the first CSI reporting configuration is an IE CSI-ReportConfig.

In an embodiment, a name of the first CSI reporting configuration includes CSI-ReportConfig.

In an embodiment, the first CSI reporting configuration indicates one CSI resource configuration, and the CSI resource configuration indicates the first CSI-RS resource set.

In a sub-embodiment of the foregoing embodiment, the CSI resource configuration is IE CSI-ResourceConfig.

In a sub-embodiment of the foregoing embodiment, the first CSI reporting configuration includes a resourcesForChannelMeasurement field, and the resourcesForChannelMeasurement field included in the first CSI reporting configuration indicates the CSI resource configuration.

In a sub-embodiment of the foregoing embodiment, the first CSI reporting configuration includes a resourcesForChannelMeasurement field, and the resourcesForChannelMeasurement field included in the first CSI reporting configuration indicates an identifier or index of the CSI resource configuration.

In an embodiment, the first CSI reporting configuration includes a resourcesForChannelMeasurement field, and the resourcesForChannelMeasurement field included in the first CSI reporting configuration indicates one CSI resource configuration, and the CSI resource configuration indicates the first CSI-RS resource set.

In an embodiment, the first CSI-RS resource set is configured by an IE NZP-CSI-RS-ResourceSet.

In an embodiment, the IE NZP-CSI-RS-ResourceSet indicates an identifier or index of each CSI-RS resource included in the first CSI-RS resource set.

In an embodiment, an identifier or index of the first CSI reporting configuration is CSI-ReportConfigId.

In an embodiment, an identifier or index of one CSI-RS resource is NZP-CSI-RS-ResourceId.

In an embodiment, an identifier or index of the first CSI-RS resource set is NZP-CSI-RS-ResourceSetId.

In an embodiment, an identifier or index of one CSI resource configuration is CSI-ResourceConfigId.

In an embodiment, for specific definitions of the IE CSI-ReportConfig, the resourcesForChannelMeasurement, and the IE CSI-ResourceConfig, refer to Section 6.3.2 of 3GPP TS 38.331.

In an embodiment, the first CSI reporting configuration indicates a first CSI-RS resource set for channel measurement and a second RS resource set for interference measurement. The second RS resource set includes one or more CSI-IM (Channel State Information-Interference Measurement, channel state information-interference measurement) resources, or the second RS resource set includes one or more CSI-IM resources and one or more NZP CSI-RS resources for interference measurement.

Typically, CSI-IM is zero-power.

In an embodiment, the first CSI reporting configuration indicates two CSI resource configurations. The two CSI resource configurations respectively indicate a first CSI-RS resource set for channel measurement and a second RS resource set for interference measurement.

In an embodiment, the first CSI reporting configuration indicates two CSI resource configurations. The two CSI resource configurations respectively indicate a first CSI-RS resource set for channel measurement and a second RS resource set for interference measurement. The second RS resource set includes one or more CSI-IM resources.

In a sub-embodiment of the foregoing embodiment, the two CSI resource configurations are two IE CSI-ResourceConfig.

In a sub-embodiment of the foregoing embodiment, the first CSI reporting configuration includes a resourcesForChannelMeasurement field and a csi-IM-ResourcesForInterference field, and the resourcesForChannelMeasurement field and the csi-IM-ResourcesForInterference field included in the first CSI reporting configuration respectively indicate the two CSI resource configurations.

In an embodiment, the first CSI reporting configuration includes a csi-IM-ResourcesForInterference field, and the csi-IM-ResourcesForInterference field included in the first CSI reporting configuration is used to indicate the second RS resource set.

In an embodiment, the first CSI reporting configuration indicates three CSI resource configurations. One CSI resource configuration in the three CSI resource configurations indicates a first CSI-RS resource set for channel measurement, and the other two CSI resource configurations in the three CSI resource configurations jointly indicate a second RS resource set for interference measurement. The second RS resource set includes one or more CSI-IM resources and one or more NZP CSI-RS resources for interference measurement.

In an embodiment, the first CSI reporting configuration indicates three CSI resource configurations. One CSI resource configuration in the three CSI resource configurations indicates a first CSI-RS resource set for channel measurement, and the other two CSI resource configurations in the three CSI resource configurations jointly indicate a second RS resource set for interference measurement. The other two CSI resource configurations respectively indicate CSI-IM resources included in the second RS resource set, and NZP CSI-RS resources for interference measurement included in the second RS resource set.

In a sub-embodiment of the foregoing embodiment, the three CSI resource configurations are three IE CSI-ResourceConfig.

In a sub-embodiment of the foregoing embodiment, the first CSI reporting configuration includes a resourcesForChannelMeasurement field, a csi-IM-ResourcesForInterference field, and an nzp-CSI-RS-ResourcesForInterference field. The resourcesForChannelMeasurement field, the csi-IM-ResourcesForInterference field, and the nzp-CSI-RS-ResourcesForInterference field included in the first CSI reporting configuration respectively indicate the three CSI resource configurations.

In an embodiment, the first CSI reporting configuration includes a csi-IM-ResourcesForInterference field and an nzp-CSI-RS-ResourcesForInterference field, and the csi-IM-ResourcesForInterference field and the nzp-CSI-RS-ResourcesForInterference field included in the first CSI reporting configuration jointly indicate the second RS resource set.

In an embodiment, for specific definitions of the IE CSI-ReportConfig, the resourcesForChannelMeasurement, the csi-IM-ResourcesForInterference, the nzp-CSI-RS-ResourcesForInterference, and the IE CSI-ResourceConfig, refer to Section 6.3.2 of 3GPP TS 38.331.

In an embodiment, the number of ports of one CSI-RS resource in the first CSI-RS resource set is a positive integer.

In an embodiment, the number of ports of one CSI-RS resource in the first CSI-RS resource set is a positive integer not greater than 32.

In an embodiment, the number of ports of one CSI-RS resource in the first CSI-RS resource set is a positive integer not greater than the first maximum integer.

In a sub-embodiment of the foregoing embodiment, the first maximum integer is 32.

In a sub-embodiment of the foregoing embodiment, the first maximum integer is 64.

In a sub-embodiment of the foregoing embodiment, the first maximum integer is less than 128.

In a sub-embodiment of the foregoing embodiment, the first maximum integer is a maximum number of ports of a CSI-RS resource supported by 3GPP Release 18.

In an embodiment, when P is greater than the number of ports of any CSI-RS resource in the first CSI-RS resource set, the first CSI reporting configuration indicates the P.

In an embodiment, P is equal to the number of ports of one CSI-RS resource in the first CSI-RS resource set, or P is greater than the number of ports of any CSI-RS resource in the first CSI-RS resource set.

In an embodiment, P is equal to the number of ports of any CSI-RS resource in the first CSI-RS resource set, or P is greater than the number of ports of any CSI-RS resource in the first CSI-RS resource set.

In an embodiment, P is equal to the number of ports of one CSI-RS resource in the first CSI-RS resource set, or the first CSI reporting configuration indicates the P, where P is greater than the number of ports of any CSI-RS resource in the first CSI-RS resource set.

In an embodiment, P is equal to the number of ports of any CSI-RS resource in the first CSI-RS resource set, or the first CSI reporting configuration indicates the P, where P is greater than the number of ports of any CSI-RS resource in the first CSI-RS resource set.

In an embodiment, the P depends on the first CSI reporting configuration.

In an embodiment, the first CSI reporting configuration indicates the P.

In an embodiment, the first CSI reporting configuration explicitly or implicitly indicates the P.

In an embodiment, the P depends on whether the first CSI reporting configuration includes a first information block.

In an embodiment, whether the first CSI reporting configuration includes a first information block is used to determine whether P is greater than the number of ports of any CSI-RS resource in the first CSI-RS resource set. When the first CSI reporting configuration includes the first information block, P is greater than the number of ports of any CSI-RS resource in the first CSI-RS resource set; or when the first CSI reporting configuration does not include the first information block, P is equal to the number of ports of one CSI-RS resource in the first CSI-RS resource set.

In an embodiment, whether the first CSI reporting configuration includes a first information block is used to determine a value range of the P. When the first CSI reporting configuration includes the first information block, the value range of P is a first value range, and the first value range includes one or more positive integers; or when the first CSI reporting configuration does not include the first information block, the value range of P is a second value range, and the second value range includes one or more positive integers. A maximum integer in the first value range is greater than a maximum integer in the second value range.

In an embodiment, a maximum value of P is greater than a maximum number of ports of a CSI-RS resource supported by 3GPP Release 18.

In an embodiment, the maximum value of P is not less than a maximum number of ports of a CSI-RS resource supported by 3GPP Release 19.

In an embodiment, the maximum value of P is greater than 32.

In an embodiment, the maximum value of P is greater than 64.

In an embodiment, the maximum value of P is equal to 128.

In an embodiment, the maximum value of P is greater than 128.

In an embodiment, whether the first CSI reporting configuration includes a first information block is used to determine whether the maximum value of P is greater than a first maximum integer, where the first maximum integer is a positive integer greater than 1. When the first CSI reporting configuration includes the first information block, the maximum value of P is greater than the first maximum integer; or when the first CSI reporting configuration does not include the first information block, the maximum value of P is equal to the first maximum integer.

In a sub-embodiment of the foregoing embodiment, the first maximum integer is 32.

In a sub-embodiment of the foregoing embodiment, the first maximum integer is 64.

In a sub-embodiment of the foregoing embodiment, the first maximum integer is less than 128.

In a sub-embodiment of the foregoing embodiment, the first maximum integer is a maximum number of ports of a CSI-RS resource supported by 3GPP Release 18.

In a sub-embodiment of the foregoing embodiment, when the first CSI reporting configuration includes the first information block, the maximum value of P is equal to or greater than 128.

In an embodiment, the first CSI reporting configuration includes a first information block, and the P depends on a value of the first information block.

In an embodiment, the P depending on the value of the first information block includes: P is equal to the value of the first information block.

In an embodiment, the P depending on the value of the first information block includes: Whether P is greater than the number of ports of any CSI-RS resource in the first CSI-RS resource set depends on the value of the first information block. When the value of the first information block is equal to a first candidate value, P is greater than the number of ports of any CSI-RS resource in the first CSI-RS resource set; or when the value of the first information block is equal to a second candidate value, P is equal to the number of ports of one CSI-RS resource in the first CSI-RS resource set.

In an embodiment, the P depending on the value of the first information block includes: A value range of the P depends on the value of the first information block. When the value of the first information block is equal to a first candidate value, the value range of P is a first value range, and the first value range includes one or more positive integers; or when the value of the first information block is equal to a second candidate value, the value range of P is a second value range, and the second value range includes one or more positive integers. A maximum integer in the first value range is greater than a maximum integer in the second value range.

In an embodiment, the P depending on the value of the first information block includes: Whether the maximum value of P is greater than 32 depends on the value of the first information block. When the value of the first information block is equal to a first candidate value, the maximum value of P is greater than a first maximum integer; or when the value of the first information block is equal to a second candidate value, the maximum value of P is equal to the first maximum integer.

In a sub-embodiment of the foregoing embodiment, the first maximum integer is 32.

In a sub-embodiment of the foregoing embodiment, the first maximum integer is 64.

In a sub-embodiment of the foregoing embodiment, the first maximum integer is less than 128.

In a sub-embodiment of the foregoing embodiment, when the value of the first information block is equal to the first candidate value, the maximum value of P is equal to or greater than 128.

In an embodiment, the first information block includes one field in the first CSI reporting configuration.

In an embodiment, the first information block includes one or more fields in the first CSI reporting configuration.

In an embodiment, at least one field in the first CSI reporting configuration indicates the first information block.

In an embodiment, the IE CSI-ResourceConfig indicating the first CSI-RS resource set includes the first information block.

The first CSI reporting configuration indicates one CSI resource configuration, the CSI resource configuration indicates the first CSI-RS resource set, and the CSI resource configuration includes the first information block.

In an embodiment, the IE NZP-CSI-RS-ResourceSet used to configure the first CSI-RS resource set includes the first information block.

### Embodiment 2

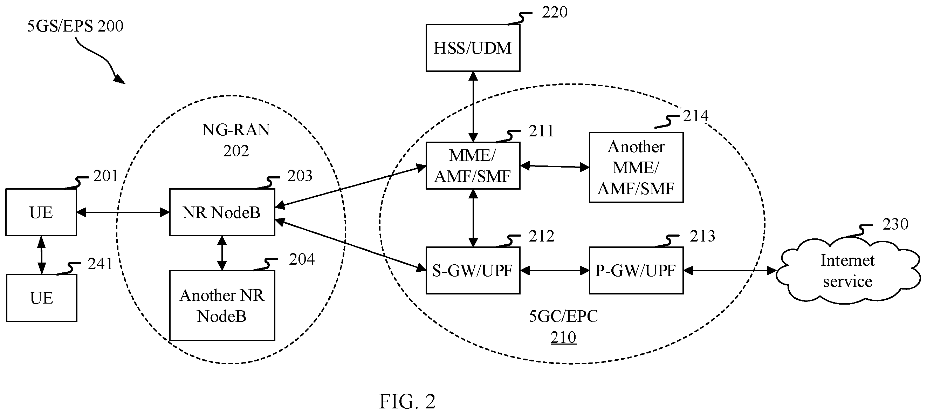

Embodiment 2 illustrates a schematic diagram of a network architecture according to an embodiment of this application, as shown in FIG. 2.

FIG. 2 describes a network architecture 200 of LTE (Long-Term Evolution, long-term evolution), LTE-A (Long-Term Evolution Advanced, long-term evolution advanced), and a future 5G system. The network architecture 200 of the LTE, the LTE-A, and the future 5G system is referred to as an EPS (Evolved Packet System, evolved packet system) 200. The 5G NR or LTE network architecture 200 may be referred to as a 5GS (5G System)/EPS (Evolved Packet System, evolved packet system) 200 or some other suitable terminology. The 5GS/EPS 200 may include one or more UEs (User Equipment, user equipment) 201, one UE 241 that performs sidelink (Sidelink) communication with the UE 201, an NG-RAN (next generation radio access network) 202, a 5GC (5G CoreNetwork, 5G core network)/EPC (Evolved Packet Core, evolved packet core) 210, an HSS (Home Subscriber Server, home subscriber server)/UDM (Unified Data Management, unified data management) 220, and an Internet service 230. The 5GS/EPS 200 may be interconnected with another access network, but these entities/interfaces are not shown for simplicity. As shown in FIG. 2, the 5GS/EPS 200 provides a packet switching service. However, a person skilled in the art will readily understand that the various concepts presented throughout this application can be extended to a network providing a circuit switching service. The NG-RAN 202 includes an NR (New Radio, new radio) NodeB (gNB) 203 and another gNB 204. The gNB 203 provides user and control plane protocol termination toward the UE 201. The gNB 203 may be connected to the another gNB 204 through an Xn interface (for example, backhaul). The gNB 203 may also be referred to as a base station, a base transceiver station, a radio base station, a radio transceiver, a transceiver function, a basic service set (BSS), an extended service set (ESS), a TRP (transmission reception point), or some other suitable terminology. The gNB 203 provides an access point to the 5GC/EPC 210 for the UE 201. Instances of the UE 201 include a cellular phone, a smart phone, a session initiation protocol (SIP) phone, a laptop computer, a personal digital assistant (PDA), satellite radio, a global positioning system, a multimedia apparatus, a video apparatus, a digital audio player (for example, an MP3 player), a camera, a game console, a drone, a flight vehicle, a narrowband physical network device, a machine type communication device, a land transportation means, an automobile, a wearable device, or any other similar functional apparatus. A person skilled in the art may also refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminology. The gNB 203 is connected to the 5GC/EPC 210 through an S1/NG interface. The 5GC/EPC 210 includes an MME (Mobility Management Entity, mobility management entity)/AMF (Authentication Management Field, authentication management field)/SMF (Session Management Function, session management function) 211, another MME/AMF/SMF 214, an S-GW (Service Gateway, service gateway)/UPF (User Plane Function, user plane function) 212, and a P-GW (Packet Date Network Gateway, packet data network gateway)/UPF 213. The MME/AMF/SMF 211 is a control node that processes signaling between the UE 201 and the 5GC/EPC 210. Generally, the MME/AMF/SMF 211 provides bearer and connection management. All user IP (Internet Protocal, Internet Protocol) packets are transmitted through the S-GW/UPF 212, and the S-GW/UPF 212 itself is connected to the P-GW/UPF 213. The P-GW provides UE IP address allocation and other functions. The P-GW/UPF 213 is connected to the Internet service 230. The Internet service 230 includes corresponding Internet Protocol services of an operator, which may specifically include Internet, intranet, IMS (IP Multimedia Subsystem, IP multimedia subsystem), and packet switching (Packet switching) services.

In an embodiment, the first node in this application includes the UE 201.

In an embodiment, the first node in this application includes the UE 241.

In an embodiment, the second node in this application includes the gNB 203.

### Embodiment 3

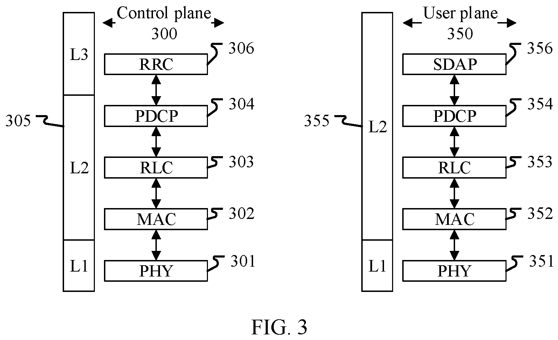

Embodiment 3 illustrates a schematic diagram of an embodiment of radio protocol architectures of a user plane and a control plane according to an embodiment of this application, as shown in FIG. 3.

Embodiment 3 illustrates a schematic diagram of an embodiment of radio protocol architectures of a user plane and a control plane according to this application, as shown in FIG. 3. FIG. 3 is a schematic diagram describing an embodiment of radio protocol architectures for a user plane 350 and a control plane 300. FIG. 3 shows a radio protocol architecture for a control plane 300 between a first communication node device (a UE, a gNB, or an RSU in V2X) and a second communication node device (a gNB, a UE, or an RSU in V2X), or between two UEs by using three layers: a layer 1, a layer 2, and a layer 3. The layer 1 (L1 layer) is a lowest layer and implements various PHY (physical layer) signal processing functions. The L1 layer is referred to as a PHY 301 herein. The layer 2 (L2 layer) 305 is above the PHY 301 and is responsible for a link between the first communication node device and the second communication node device, or between two UEs. The L2 layer 305 includes a MAC (Medium Access Control, medium access control) sublayer 302, an RLC (Radio Link Control, radio link layer control protocol) sublayer 303, and a PDCP (Packet Data Convergence Protocol, packet data convergence protocol) sublayer 304. These sublayers terminate at the second communication node device. The PDCP sublayer 304 provides multiplexing between different radio bearers and logical channels. The PDCP sublayer 304 further provides security by encrypting a data packet, and provides inter-cell mobility support for the first communication node device between second communication node devices. The RLC sublayer 303 provides segmentation and reassembly of an upper layer data packet, retransmission of a lost data packet, and reordering of data packets to compensate for out-of-order reception due to HARQ. The MAC sublayer 302 provides multiplexing between logical and transmission channels. The MAC sublayer 302 is further responsible for allocating various radio resources (for example, resource blocks) in a cell between first communication node devices. The MAC sublayer 302 is further responsible for a HARQ operation. An RRC (Radio Resource Control, radio resource control) sublayer 306 at the layer 3 (L3 layer) in the control plane 300 is responsible for obtaining a radio resource (namely, a radio bearer) and configuring a lower layer by using RRC signaling between the second communication node device and the first communication node device. A radio protocol architecture of the user plane 350 includes a layer 1 (L1 layer) and a layer 2 (L2 layer). In the user plane 350, the radio protocol architecture for the first communication node device and the second communication node device is substantially the same as corresponding layers and sublayers in the control plane 300 with respect to a physical layer 351, a PDCP sublayer 354 at an L2 layer 355, an RLC sublayer 353 at the L2 layer 355, and a MAC sublayer 352 at the L2 layer 355, even though the PDCP sublayer 354 further provides header compression for an upper layer data packet to reduce radio transmission overheads. The L2 layer 355 in the user plane 350 further includes an SDAP (Service Data Adaptation Protocol, service data adaptation protocol) sublayer 356. The SDAP sublayer 356 is responsible for mapping between a QoS flow and a data radio bearer (DRB, Data Radio Bearer) to support service diversity. Although not shown in the figure, the first communication node device may have several upper layers above the L2 layer 355, including a network layer (for example, an IP layer) terminated at a P-GW on a network side and an application layer terminated at the other end of connection (for example, a remote UE and a server).

In an embodiment, the radio protocol architecture in FIG. 3 is applicable to the first node in this application.

In an embodiment, the radio protocol architecture in FIG. 3 is applicable to the second node in this application.

In an embodiment, the first CSI reporting configuration is generated at the RRC sublayer 306.

In an embodiment, the first CSI is generated at the PHY 301.

In an embodiment, the first CSI is generated at the PHY 351.

In an embodiment, the CSI-RS in the first CSI-RS resource set is generated at the PHY 301.

In an embodiment, the CSI-RS in the first CSI-RS resource set is generated at the PHY 351.

In an embodiment, the higher layer in this application is a layer above the physical layer.

In an embodiment, the higher layer in this application is an RRC layer.

In an embodiment, the higher layer in this application is a MAC layer.

In an embodiment, the higher layer in this application includes at least one of an RRC layer or a MAC layer.

### Embodiment 4

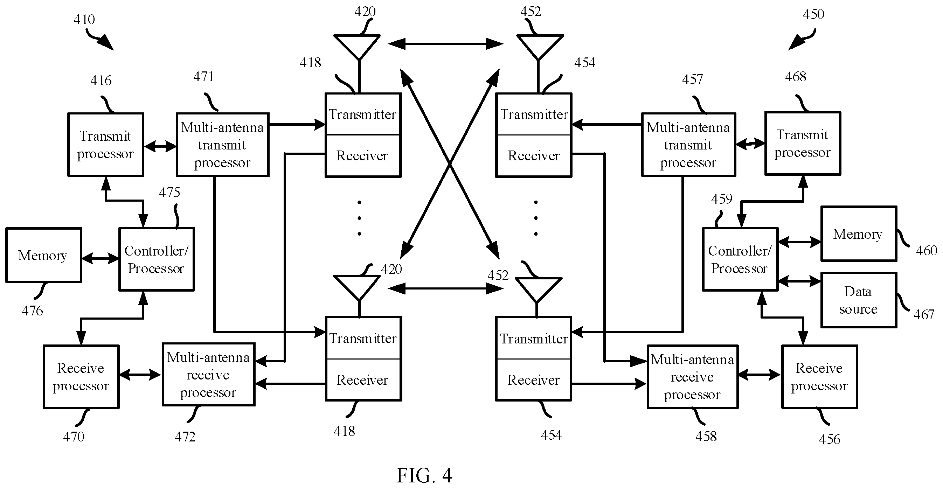

Embodiment 4 illustrates a schematic diagram of a first communication device and a second communication device according to an embodiment of this application, as shown in FIG. 4. FIG. 4 is a block diagram of a first communication device 410 and a second communication device 450 communicating with each other in an access network.

The first communication device 410 includes a controller/processor 475, a memory 476, a receive processor 470, a transmit processor 416, a multi-antenna receive processor 472, a multi-antenna transmit processor 471, a transmitting unit/receiving unit 418, and an antenna 420.

The second communication device 450 includes a controller/processor 459, a memory 460, a data source 467, a transmit processor 468, a receive processor 456, a multi-antenna transmit processor 457, a multi-antenna receive processor 458, a transmitter/receiving unit 454, and an antenna 452.

During transmission from the first communication device 410 to the second communication device 450, at the first communication device 410, an upper layer data packet from a core network is provided to the controller/processor 475. The controller/processor 475 implements a function of an L2 layer. In a DL, the controller/processor 475 provides header compression, encryption, packet segmentation and reordering, multiplexing between logical and transmission channels, and radio resource allocation for the second communication device 450 based on various priority metrics. The controller/processor 475 is further responsible for a HARQ operation, retransmission of a lost packet, and signaling to the second communication device 450. The transmit processor 416 and the multi-antenna transmit processor 471 implement various signal processing functions for an L1 layer (namely, a physical layer). The transmit processor 416 implements encoding and interleaving to facilitate forward error correction (FEC) at the second communication device 450, and constellation mapping based on various modulation schemes (such as binary phase shift keying (BPSK), quadrature phase shift keying (QPSK), M-ary phase shift keying (M-PSK), and M-ary quadrature amplitude modulation (M-QAM)). The multi-antenna transmit processor 471 performs digital space precoding, including codebook-based precoding and non-codebook-based precoding, on an encoded and modulated symbol, and beamforming processing, to generate one or more parallel streams. The transmit processor 416 then maps each parallel stream to a subcarrier, multiplexes the modulated symbol with a reference signal (for example, a pilot) in time domain and/or frequency domain, and then uses inverse fast Fourier transform (IFFT) to generate a physical channel carrying a time domain multicarrier symbol stream. Then, the multi-antenna transmit processor 471 performs an operation of analog precoding sending/beamforming on the time domain multicarrier symbol stream. Each transmitter 418 converts a baseband multicarrier symbol stream provided by the multi-antenna transmit processor 471 into a radio frequency stream, and then provides the radio frequency stream to different antennas 420.

During transmission from the first communication device 410 to the second communication device 450, at the second communication device 450, each receiving unit 454 receives a signal through a corresponding antenna 452 of the receiver. Each receiving unit 454 recovers information modulated onto a radio frequency carrier, converts a radio frequency stream into a baseband multicarrier symbol stream, and provides the baseband multicarrier symbol stream to the receive processor 456. The receive processor 456 and the multi-antenna receive processor 458 implement various signal processing functions of the L1 layer. The multi-antenna receive processor 458 performs an operation of analog precoding receiving/beamforming on the baseband multicarrier symbol stream from the receiving unit 454. The receive processor 456 converts, from time domain to frequency domain through fast Fourier transform (FFT), the baseband multicarrier symbol stream obtained after the operation of analog precoding receiving/beamforming. In frequency domain, a physical-layer data signal and a reference signal are demultiplexed by the receive processor 456. The reference signal is used for channel estimation; and the data signal is recovered after multi-antenna detection performed by the multi-antenna receive processor 458, to obtain any parallel stream that uses the second communication device 450 as a destination. A symbol on each parallel stream is demodulated and recovered in the receive processor 456, and a soft decision is generated. The receive processor 456 then decodes and de-interleaves the soft decision to recover upper layer data and a control signal transmitted by the first communication device 410 on a physical channel. The upper layer data and the control signal are then provided to the controller/processor 459. The controller/processor 459 implements functions of the L2 layer. The controller/processor 459 may be associated with the memory 460 that stores program code and data. The memory 460 may be referred to as a computer-readable medium. In the DL (DownLink, downlink), the controller/processor 459 provides demultiplexing between transmission and logical channels, packet reassembly, decryption, header decompression, and control signal processing, to recover the upper layer data packet from the core network. The upper layer data packet is then provided to all protocol layers above the L2 layer. Various control signals may also be provided to an L3 for processing by the L3. The controller/processor 459 is further responsible for error detection by using an acknowledgment (ACK) and/or negative acknowledgment (NACK) protocol to support a HARQ operation.

During transmission from the second communication device 450 to the first communication device 410, at the second communication device 450, an upper layer data packet is provided to the controller/processor 459 by using the data source 467. The data source 467 represents all protocol layers above the L2 layer. Similar to the described sending function at the first communication device 410 in the DL, the controller/processor 459 implements header compression, encryption, packet segmentation and reordering, and multiplexing between logical and transmission channels based on radio resource allocation of the first communication device 410, to implement functions of the L2 layer for the user plane and the control plane. The controller/processor 459 is further responsible for a HARQ operation, retransmission of a lost packet, and signaling to the first communication device 410. The transmit processor 468 performs modulation mapping and channel encoding processing, and the multi-antenna transmit processor 457 performs digital multi-antenna spatial precoding, including codebook-based precoding and non-codebook-based precoding, and beamforming processing. Then, the transmit processor 468 modulates a generated parallel stream into a multicarrier/single-carrier symbol stream, and the multicarrier/single-carrier symbol stream is provided to different antennas 452 by using the transmitter 454 after undergoing an analog precoding/beamforming operation in the multi-antenna transmit processor 457. Each transmitter 454 first converts a baseband symbol stream provided by the multi-antenna transmit processor 457 into a radio frequency symbol stream, and then provides the radio frequency symbol stream to the antenna 452.

During transmission from the second communication device 450 to the first communication device 410, a function at the first communication device 410 is similar to the receiving function at the second communication device 450 described during the transmission from the first communication device 410 to the second communication device 450. Each receiving unit 418 receives a radio frequency signal through a corresponding antenna 420 of the receiver, converts the received radio frequency signal into a baseband signal, and provides the baseband signal to the multi-antenna receive processor 472 and the receive processor 470. The receive processor 470 and the multi-antenna receive processor 472 jointly implement functions of the L1 layer. The controller/processor 475 implements functions of the L2 layer. The controller/processor 475 may be associated with the memory 476 that stores program code and data. The memory 476 may be referred to as a computer-readable medium. The controller/processor 475 provides demultiplexing between transmission and logical channels, packet reassembly, decryption, header decompression, and control signal processing, to recover an upper layer data packet from the second communication device 450. The upper layer data packet from the controller/processor 475 may be provided to the core network. The controller/processor 475 is further responsible for error detection by using an ACK and/or NACK protocol to support a HARQ operation.

In an embodiment, the second communication device 450 includes at least one processor and at least one memory. The at least one memory includes computer program code, and the at least one memory and the computer program code are configured to be used with the at least one processor. The second communication device 450 apparatus at least: receives a first CSI reporting configuration, where the first CSI reporting configuration indicates a first CSI-RS resource set for channel measurement, the first CSI-RS resource set includes a plurality of CSI-RS resources; and the first CSI reporting configuration is used to configure reporting for CSI with P ports, where P is a positive integer greater than 1; and sends first CSI, where the first CSI is the CSI for P ports configured by the first CSI reporting configuration. The first CSI includes a CQI, and a target power control offset is a ratio that is of PDSCH EPRE to CSI-RS EPRE and that is used for calculating the CQI in the first CSI; and the target power control offset depends on whether P is greater than the number of ports of any CSI-RS resource in the first CSI-RS resource set.

In an embodiment, the second communication device 450 includes a memory storing a computer-readable instruction program. The computer-readable instruction program generates actions when being executed by at least one processor. The actions include: receiving a first CSI reporting configuration, where the first CSI reporting configuration indicates a first CSI-RS resource set for channel measurement, the first CSI-RS resource set includes a plurality of CSI-RS resources; and the first CSI reporting configuration is used to configure reporting for CSI with P ports, where P is a positive integer greater than 1; and sending first CSI, where the first CSI is the CSI for P ports configured by the first CSI reporting configuration. The first CSI includes a CQI, and a target power control offset is a ratio that is of PDSCH EPRE to CSI-RS EPRE and that is used for calculating the CQI in the first CSI; and the target power control offset depends on whether P is greater than the number of ports of any CSI-RS resource in the first CSI-RS resource set.

In an embodiment, the first communication device 410 includes at least one processor and at least one memory. The at least one memory includes computer program code, and the at least one memory and the computer program code are configured to be used with the at least one processor. The first communication device 410 apparatus at least: sends a first CSI reporting configuration, where the first CSI reporting configuration indicates a first CSI-RS resource set for channel measurement, the first CSI-RS resource set includes a plurality of CSI-RS resources; and the first CSI reporting configuration is used to configure reporting for CSI with P ports, where P is a positive integer greater than 1; and receives first CSI, where the first CSI is the CSI for P ports configured by the first CSI reporting configuration. The first CSI includes a CQI, and a target power control offset is a ratio that is of PDSCH EPRE to CSI-RS EPRE and that is used for calculating the CQI in the first CSI; and the target power control offset depends on whether P is greater than the number of ports of any CSI-RS resource in the first CSI-RS resource set.

In an embodiment, the first communication device 410 includes a memory storing a computer-readable instruction program. The computer-readable instruction program generates actions when being executed by at least one processor. The actions include: sending a first CSI reporting configuration, where the first CSI reporting configuration indicates a first CSI-RS resource set for channel measurement, the first CSI-RS resource set includes a plurality of CSI-RS resources; and the first CSI reporting configuration is used to configure reporting for CSI with P ports, where P is a positive integer greater than 1; and receiving first CSI, where the first CSI is the CSI for P ports configured by the first CSI reporting configuration. The first CSI includes a CQI, and a target power control offset is a ratio that is of PDSCH EPRE to CSI-RS EPRE and that is used for calculating the CQI in the first CSI; and the target power control offset depends on whether P is greater than the number of ports of any CSI-RS resource in the first CSI-RS resource set.

In an embodiment, the first node in this application includes the second communication device 450.

In an embodiment, the second node in this application includes the first communication device 410.

In an embodiment, at least one of {the antenna 452, the receiving unit 454, the receive processor 456, the multi-antenna receive processor 458, the controller/processor 459, the memory 460, and the data source 467} is used to receive the first CSI reporting configuration in this application; and at least one of {the antenna 420, the transmitter 418, the transmit processor 416, the multi-antenna transmit processor 471, the controller/processor 475, and the memory 476} is used to send the first CSI reporting configuration in this application.

In an embodiment, at least one of {the antenna 452, the transmitter 454, the transmit processor 468, the multi-antenna transmit processor 457, the controller/processor 459, and the memory 460} is used to send the first CSI in this application; and at least one of {the antenna 420, the receiving unit 418, the receive processor 470, the multi-antenna receive processor 472, the controller/processor 475, and the memory 476} is used to receive the first CSI in this application.

In an embodiment, at least one of {the antenna 452, the receiving unit 454, the receive processor 456, the multi-antenna receive processor 458, the controller/processor 459, the memory 460, and the data source 467} is used to receive the CSI-RS in the first CSI-RS resource set in this application; and at least one of {the antenna 420, the transmitter 418, the transmit processor 416, the multi-antenna transmit processor 471, the controller/processor 475, and the memory 476} is used to send the CSI-RS in the first CSI-RS resource set in this application.

In an embodiment, at least one of {the antenna 452, the receiving unit 454, the receive processor 456, the multi-antenna receive processor 458, the controller/processor 459, the memory 460, and the data source 467} is used to receive the reference signal in the second RS resource set in this application; and at least one of {the antenna 420, the transmitter 418, the transmit processor 416, the multi-antenna transmit processor 471, the controller/processor 475, and the memory 476} is used to send the reference signal in the second RS resource set in this application.

### Embodiment 5

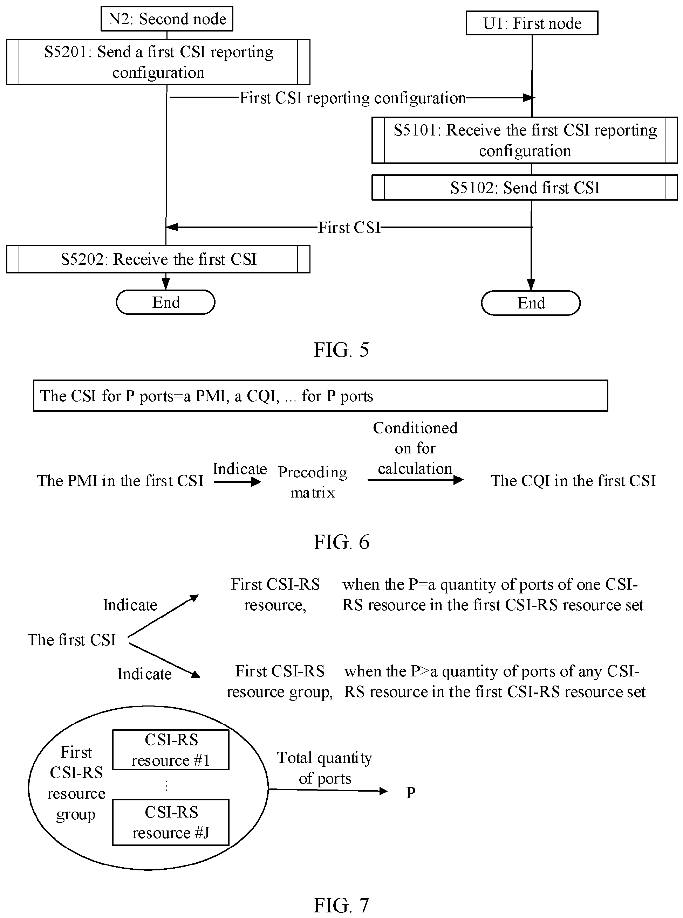

Embodiment 5 illustrates a flowchart of wireless transmission according to an embodiment of this application, as shown in FIG. 5. In FIG. 5, a first node U1 and a second node N2 are respectively two communication nodes that perform transmission through an air interface.

The **first node U1** receives a first CSI reporting configuration in step S5101; and sends first CSI in step S5102.

The **second node N2** sends the first CSI reporting configuration in step S5201; and receives the first CSI in step S5202.

In Embodiment 5, the first CSI reporting configuration indicates a first CSI-RS resource set for channel measurement, and the first CSI-RS resource set includes a plurality of CSI-RS resources; and the first CSI reporting configuration is used to configure reporting for CSI with P ports, where P is a positive integer greater than 1. The first CSI is the CSI for P ports configured by the first CSI reporting configuration. The first CSI includes a CQI, and a target power control offset is a ratio that is of PDSCH EPRE to CSI-RS EPRE and that is used for calculating the CQI in the first CSI; and the target power control offset depends on whether P is greater than the number of ports of any CSI-RS resource in the first CSI-RS resource set.

Typically, the first node receives a CSI-RS in some or all CSI-RS resources in the first CSI-RS resource set.

Typically, the second node sends a CSI-RS in some or all CSI-RS resources in the first CSI-RS resource set.

Typically, the first node receives a reference signal in some or all RS resources in the second RS resource set.

Typically, the second node sends a reference signal in some or all RS resources in the second RS resource set.

Typically, the first receiver in this application receives a CSI-RS in some or all CSI-RS resources in the first CSI-RS resource set.

Typically, the second transmitter in this application sends a CSI-RS in some or all CSI-RS resources in the first CSI-RS resource set.

Typically, the first receiver in this application receives a reference signal in some or all RS resources in the second RS resource set.

Typically, the second transmitter in this application sends a reference signal in some or all RS resources in the second RS resource set.

In an embodiment, the first CSI is aperiodic (aperiodic) CSI configured by the first CSI reporting configuration.

In an embodiment, the first CSI is periodic CSI configured by the first CSI reporting configuration.

In an embodiment, the first CSI is semi-persistent (semi-persistent) CSI configured by the first CSI reporting configuration.

In an embodiment, the first CSI is transmitted on a physical channel.

In an embodiment, the first CSI is transmitted on a PUSCH (Physical Uplink Shared Channel, physical uplink shared channel).

In an embodiment, the first CSI is transmitted on a PUCCH (Physical Uplink Control Channel, physical uplink control channel).

In an embodiment, the first CSI is semi-persistent CSI, and the first CSI is activated by a MAC CE.

In an embodiment, the first CSI is semi-persistent CSI, the first CSI is activated by a MAC CE, and a name of the MAC CE used to activate the first CSI includes: SP CSI reporting on PUCCH Activation MAC CE.

In an embodiment, the first CSI is aperiodic CSI, and the first CSI is triggered by DCI (Downlink Control Information, downlink control information). The DCI includes a CSI request field, the CSI request field of the DCI is used to indicate a trigger state (trigger state), and the trigger state indicates the first CSI reporting configuration.

In an embodiment, the first CSI is semi-persistent CSI, and the first node sends the first CSI on a PUCCH when the first node receives an activation command (activation command).

In a sub-embodiment of the foregoing embodiment, the activation command (activation command) is a MAC CE.

In a sub-embodiment of the foregoing embodiment, the activation command (activation command) includes: SP CSI reporting on PUCCH Activation MAC CE.

In an embodiment, the first CSI is semi-persistent CSI, and the first node sends the first CSI on a PUSCH when the first node is triggered by DCI.

In an embodiment, the first CSI reporting configuration includes a reportConfigType (reporting configuration type) field, and the reportConfigType (reporting configuration type) field in the first CSI reporting configuration indicates which one of periodic (periodic), semi-persistent on a PUSCH (semi Persistent On PUSCH), semi-persistent on a PUCCH (semi Persistent On PUCCH), or aperiodic (aperiodic) the first CSI is.

In an embodiment, the first CSI reporting configuration further indicates a reporting quantity included in the first CSI.

In an embodiment, the first CSI reporting configuration includes a reportQuantity field, and the field in the first CSI reporting configuration indicates the reporting quantity (report quantity) included in the first CSI.

In an embodiment, the first CSI includes at least CQI (Channel quality indicator, channel quality indicator) among the CQI, a PMI (Precoding Matrix Indicator, precoding indicator), a CRI (CSI-RS Resource Indicator, channel state information reference signal resource indicator), a layer indicator (Layer Indicator, LI), and an RI (Rank Indicator, rank indicator).

In an embodiment, the CSI for P ports is calculated based on channel measurement for P CSI-RS ports.

In an embodiment, the CSI for P ports is calculated based on a channel parameter matrix obtained through channel measurement for P CSI-RS ports.

In an embodiment, the CSI for P ports includes a PMI for P ports.

In an embodiment, the CSI for P ports includes a PMI for P ports, where the PMI for P ports indicates a precoding matrix in a codebook for P ports.

In an embodiment, the CSI for P ports includes a PMI for P ports, where the PMI for P ports indicates a precoding matrix with a quantity of rows equal to the P.

In an embodiment, the CSI for P ports includes an RI, where a rank indicated by the RI in the CSI for P ports is a positive integer not greater than the P.

Under the constraints of the foregoing methods or embodiments, how to calculate the CSI for P ports is determined independently by a manufacturer of the first node, or is implementation-related. The following describes a typical but non-limiting implementation.

The first node performs measurement on P CSI-RS ports to obtain a channel parameter matrix *H*_{*r*×*P*} ; and performs power adjustment on the channel parameter matrix *H*_{*r*×}*_{P} .* The adjusted channel parameter matrix is $\sqrt{Q} ⋅ {H}_{r \times P}$, where *Q* is the target power control offset (namely, a ratio of PDSCH EPRE to CSI-RS EPRE). Under the condition of using the precoding matrix *W*_{*P*×*l*}, a precoded channel parameter matrix is $\sqrt{P} ⋅ {H}_{r \times P} ⋅ {W}_{P \times l}$, where *l* is a rank (rank) or a quantity of layers. In one case, *l* is a positive integer not greater than *P.* In another case, the precoding matrix is an identity matrix, and in this case, *P = l.* An equivalent channel capacity of *H*_{*r*×*P*} · *W*_{*P*×*l*} is calculated by using criteria such as a SINR (Signal Interference Noise Ratio, signal interference noise ratio), EESM (Exponential Effective SINR Mapping, exponential effective SINR mapping), or an RBIR (Received Block mean mutual Information Ratio, received block mean mutual Information ratio). Then, the CSI for P ports is determined from the equivalent channel capacity through table lookup or the like.

In an embodiment, the first CSI includes at least a CQI.

In an embodiment, the first CSI includes at least an RI and a CQI.

In an embodiment, the first CSI includes at least an RI, a PMI, and a CQI.

In an embodiment, the first CSI includes at least an RI, an LI, a PMI, and a CQI.

In an embodiment, the first CSI includes at least a first resource indication and a CQI. The first resource indication indicates one or more CSI-RS resources in the first CSI-RS resource set, or the first resource indication includes one or more CRIs.

In an embodiment, the first CSI includes at least a first resource indication, an RI, and a CQI. The first resource indication indicates one or more CSI-RS resources in the first CSI-RS resource set, or the first resource indication includes one or more CRIs.

In an embodiment, the first CSI includes at least a first resource indication, an RI, a PMI, and a CQI. The first resource indication indicates one or more CSI-RS resources in the first CSI-RS resource set, or the first resource indication includes one or more CRIs.

In an embodiment, the first CSI includes a first resource indication, an RI, an LI, a PMI, and a CQI. The first resource indication indicates one or more CSI-RS resources in the first CSI-RS resource set, or the first resource indication includes one or more CRIs.

In an embodiment, the first CSI includes at least an RI and a CQI. A rank indicated by the RI in the first CSI is a positive integer not greater than the P, and the CQI in the first CSI is calculated conditioned on (conditioned on) at least the RI in the first CSI.

In an embodiment, the first CSI includes at least an RI, a PMI, and a CQI. The CQI in the first CSI is calculated conditioned on at least the RI in the first CSI and the PMI in the first CSI.

In an embodiment, the first CSI includes at least an RI, an LI, a PMI, and a CQI. The CQI in the first CSI is calculated conditioned on at least the RI, the LI, and the PMI in the first CSI.

In an embodiment, the first CSI includes at least a first resource indication and a CQI. The first resource indication indicates one or more CSI-RS resources in the first CSI-RS resource set, or the first resource indication includes one or more CRIs. The CQI in the first CSI is calculated conditioned on (conditioned on) at least the first resource indication in the first CSI.

In an embodiment, the first CSI includes at least a first resource indication, an RI, and a CQI. The first resource indication indicates one or more CSI-RS resources in the first CSI-RS resource set, or the first resource indication includes one or more CRIs. The CQI in the first CSI is calculated conditioned on (conditioned on) at least the first resource indication and the RI in the first CSI.

In an embodiment, the first CSI includes at least a first resource indication, an RI, a PMI, and a CQI. The first resource indication indicates one or more CSI-RS resources in the first CSI-RS resource set, or the first resource indication includes one or more CRIs. The CQI in the first CSI is calculated conditioned on (conditioned on) at least the first resource indication, the RI, and the PMI in the first CSI.

In an embodiment, the first CSI includes a first resource indication, an RI, an LI, a PMI, and a CQI. The first resource indication indicates one or more CSI-RS resources in the first CSI-RS resource set, or the first resource indication includes one or more CRIs. The CQI in the first CSI is calculated conditioned on (conditioned on) at least the first resource indication, the RI, the LI, and the PMI in the first CSI.

In an embodiment, the first CSI-RS resource set is used for channel measurement of the first CSI.

In an embodiment, the first CSI-RS resource set is used for channel measurement of the first CSI, and the second RS resource set is used for interference measurement of the first CSI.

In an embodiment, only an RS that is in the first CSI-RS resource set and that is not later than a CSI reference resource of the first CSI is used to obtain channel measurement of the first CSI.

In an embodiment, a first occasion set includes at least one transmission occasion that is of at least one CSI-RS resource in the first CSI-RS resource set and that is not later than the CSI reference resource of the first CSI, and the first occasion set is used to obtain channel measurement of the first CSI.

In an embodiment, a first occasion set includes at least one transmission occasion that is of each CSI-RS resource in the first CSI-RS resource set and that is not later than the CSI reference resource of the first CSI, and the first occasion set is used to obtain channel measurement of the first CSI.

In an embodiment, a first occasion set includes one transmission occasion that is of at least one CSI-RS resource in the first CSI-RS resource set and that is not later than the CSI reference resource of the first CSI, and the first occasion set is used to obtain channel measurement of the first CSI.

In an embodiment, a first occasion set includes one transmission occasion that is of each CSI-RS resource in the first CSI-RS resource set and that is not later than the CSI reference resource of the first CSI, and the first occasion set is used to obtain channel measurement of the first CSI.

In an embodiment, only an RS that is in the first CSI-RS resource set and that is not later than a CSI reference resource of the first CSI is used to obtain channel measurement of the first CSI; and only an RS that is in the second RS resource set and that is not later than the CSI reference resource of the first CSI is used to obtain interference measurement of the first CSI.

In an embodiment, a first occasion set includes at least one transmission occasion that is of at least one CSI-RS resource in the first CSI-RS resource set and that is not later than the CSI reference resource of the first CSI, and the first occasion set is used to obtain channel measurement of the first CSI. A second occasion set includes at least one transmission occasion that is of at least one RS resource in the second RS resource set and that is not later than the CSI reference resource of the first CSI, and the second occasion set is used to obtain interference measurement of the first CSI.

In an embodiment, a first occasion set includes at least one transmission occasion that is of each CSI-RS resource in the first CSI-RS resource set and that is not later than the CSI reference resource of the first CSI, and the first occasion set is used to obtain channel measurement of the first CSI. A second occasion set includes at least one transmission occasion that is of each RS resource in the second RS resource set and that is not later than the CSI reference resource of the first CSI, and the second occasion set is used to obtain interference measurement of the first CSI.

In an embodiment, a first occasion set includes one transmission occasion that is of at least one CSI-RS resource in the first CSI-RS resource set and that is not later than the CSI reference resource of the first CSI, and the first occasion set is used to obtain channel measurement of the first CSI. The second occasion set includes one transmission occasion that is of at least one RS resource in the second RS resource set and that is not later than the CSI reference resource of the first CSI, and the second occasion set is used to obtain interference measurement of the first CSI.

In an embodiment, a first occasion set includes one transmission occasion that is of each CSI-RS resource in the first CSI-RS resource set and that is not later than the CSI reference resource of the first CSI, and the first occasion set is used to obtain channel measurement of the first CSI.

In an embodiment, one CSI-RS resource belongs to a plurality of slots in time domain, and a part in one slot is referred to as one transmission occasion of the CSI-RS resource.

In an embodiment, one transmission occasion of one CSI-RS resource is one transmission of the CSI-RS resource.

In an embodiment, one RS resource belongs to a plurality of slots in time domain, and a part in one slot is referred to as one transmission occasion of the RS resource.

In an embodiment, one transmission occasion of one RS resource is one transmission of the RS resource.

In an embodiment, the CSI reference resource of the first CSI is a frequency domain resource for the first CSI in frequency domain.

In an embodiment, the CSI reference resource of the first CSI is a subband (subband) or broadband for the first CSI in frequency domain.

In an embodiment, the CSI reference resource of the first CSI belongs to a same BWP (Bandwidth Part, bandwidth part) as a frequency domain resource for the first CSI in frequency domain.

In an embodiment, the CSI reference resource of the first CSI is a first downlink slot in time domain, where the first downlink slot depends on a second uplink slot, and the second uplink slot is an uplink slot for sending the first CSI.

In an embodiment, the CSI reference resource of the first CSI is a first downlink slot in time domain.

In an embodiment, the CSI reference resource of the first CSI is a downlink slot (downlink slot).

In an embodiment, the CSI reference resource of the first CSI depends on a second uplink slot.

In an embodiment, the first downlink slot depends on the second uplink slot.

In an embodiment, the second uplink slot is an uplink slot *n'*.

In an embodiment, the second uplink slot is an uplink slot for sending the first CSI.

In an embodiment, the second uplink slot is an uplink slot in which a PUCCH carrying the first CSI is located.

In an embodiment, the second uplink slot is an uplink slot in which a PUSCH carrying the first CSI is located.

In an embodiment, for descriptions of the CSI reference resource of the first CSI, refer to Section 5.2.2.5 of 3GPP TS38.214.

In an embodiment, the first downlink slot is a downlink slot $n - {n}_{CSI _ ref} - {K}_{offset} ⋅ \frac{{2}^{{μ}_{DL}}}{{2}^{{μ}_{{K}_{offset}}}}$ , where *K_{offset}* is configured by higher layer signaling, *µ_{K_{offset}}* is a subcarrier spacing configuration (subcarrier spacing configuration) of the *K_{offset}.*

In an embodiment, *n_{CSI_ref}* is a minimum value not less than 4 · 2^{µ_{DL}}.

In an embodiment, *n_{CSI_ref}* is a minimum value not less than 5 · 2^{µ_{DL}}.

In an embodiment, the *n* is a sum of a first component and a second component.

In an embodiment, the first component is an integer.

In an embodiment, the first component is $\left⌊n′⋅\frac{{2}^{{μ}_{DL}}}{{2}^{{μ}_{UL}}}\right⌋$, where *µ_{DL}* and *µ_{UL}* are respectively downlink and uplink subcarrier spacing configurations, and $\left⌊x\right⌋$ represents a floor operation on *x*.

In an embodiment, the second component is an integer.

In an embodiment, the second component is $\left⌊\left(\frac{{N}_{slot , offset , UL}^{CA}}{{2}^{{μ}_{offset , UL}}}-\frac{{N}_{slot , offset , DL}^{CA}}{{2}^{{μ}_{offset , DL}}}\right)⋅{2}^{{μ}_{DL}}\right⌋$, where ${N}_{slot , offset}^{CA}$ and *µ_{offset}* are configured by a higher layer parameter ca-SlotOffset. For detailed descriptions, refer to Section 4.5 of 3GPP TS38.211.

In an embodiment, the *n* is $\left⌊n′⋅\frac{{2}^{{μ}_{DL}}}{{2}^{{μ}_{UL}}}\right⌋ + \left⌊\left(\frac{{N}_{slot , offset , UL}^{CA}}{{2}^{{μ}_{offset , UL}}}-\frac{{N}_{slot , offset , DL}^{CA}}{{2}^{{μ}_{offset , DL}}}\right)⋅{2}^{{μ}_{DL}}\right⌋ .$*.*

In an embodiment, the first downlink slot is a downlink slot $\left⌊n′⋅\frac{{2}^{{μ}_{DL}}}{{2}^{{μ}_{UL}}}\right⌋ + \left⌊\left(\frac{{N}_{slot , offset , UL}^{CA}}{{2}^{{μ}_{offset , UL}}}-\frac{{N}_{slot , offset , DL}^{CA}}{{2}^{{μ}_{offset , DL}}}\right)⋅{2}^{{μ}_{DL}}\right⌋ - {n}_{CSI _ ref} - {K}_{offset} ⋅ \frac{{2}^{{μ}_{DL}}}{{2}^{{μ}_{{K}_{offset}}}}$ .

In an embodiment, the target power control offset is powerControlOffset used to calculate the CQI in the first CSI.

In an embodiment, the target power control offset is powerControlOffset assumed for calculating the CQI in the first CSI.

In an embodiment, the target power control offset being the ratio that is of PDSCH (Physical downlink shared channel, physical downlink shared channel) EPRE (Energy per resource element, energy per resource element) to CSI-RS EPRE and that is used for calculating the CQI in the first CSI includes: The target power control offset is a ratio that is of PDSCH EPRE to CSI-RS EPRE and that is assumed for calculating the CQI in the first CSI.

In an embodiment, the ratio of PDSCH EPRE to CSI-RS EPRE is powerControlOffset.

In an embodiment, for a specific definition of the powerControlOffset, refer to Section 5.2.2.3 of 3GPP TS38.214.

In this application, the first CSI includes the CQI, and the target power control offset is the ratio that is of PDSCH EPRE to CSI-RS EPRE and that is used for calculating the CQI in the first CSI.

Under the constraints of the foregoing methods or embodiments, how the target power control offset (namely, a ratio of PDSCH EPRE to CSI-RS EPRE) is used to calculate the first CSI is determined independently by a manufacturer of the first node, or is implementation-related. The following describes a typical but non-limiting implementation.

The first node performs measurement on P CSI-RS ports to obtain a channel parameter matrix *H_{r×P}*, where the P CSI-RS ports include ports of one or more CSI-RS resources in the first CSI-RS resource set; and performs power adjustment on the channel parameter matrix *H*_{*r*×}*_{P}.* The adjusted channel parameter matrix is $\sqrt{Q} ⋅ {H}_{r \times P}$, where *Q* is the target power control offset (namely, a ratio of PDSCH EPRE to CSI-RS EPRE).

Under the constraints of the foregoing methods or embodiments, a specific algorithm used to calculate the first CSI is determined independently by a manufacturer of the first node, or is implementation-related. The following describes a typical but non-limiting implementation.

The first node performs measurement on P CSI-RS ports to obtain a channel parameter matrix *H*_{*r*×}*_{P},* where the P CSI-RS ports include ports of one or more CSI-RS resources in the first CSI-RS resource set; and performs power adjustment on the channel parameter matrix *H*_{*r*×}*_{P}.* The adjusted channel parameter matrix is $\sqrt{Q} ⋅ {H}_{r \times P}$, where *Q* is the target power control offset (namely, a ratio of PDSCH EPRE to CSI-RS EPRE).Under the condition of using the precoding matrix *W*_{*P*×*l*}, a precoded channel parameter matrix is $\sqrt{P} ⋅ {H}_{r \times P} ⋅ {W}_{P \times l}$, where *l* is a rank (rank) or a quantity of layers. In one case, *l* is a positive integer not greater than *P.* In another case, the precoding matrix is an identity matrix, and in this case, *P = l*. An equivalent channel capacity of *H*_{*r*×*P*} · *W*_{*P*×*l*} is calculated by using criteria such as a SINR (Signal Interference Noise Ratio, signal interference noise ratio), EESM (Exponential Effective SINR Mapping, exponential effective SINR mapping), or an RBIR (Received Block mean mutual Information Ratio, received block mean mutual Information ratio). Then, the CQI in the first CSI is determined from the equivalent channel capacity through table lookup or the like. Generally, the calculation of the equivalent channel capacity requires the first node to estimate interference (including noise (noise)), and the first node can obtain interference through measurement of an RS resource in the second RS resource set in this application. Generally, direct mapping of the equivalent channel capacity to a value of the CQI depends on receiver performance or a hardware-related factor such as a modulation scheme.

Under the constraints of the foregoing methods or embodiments, a specific algorithm used to calculate the first CSI is determined independently by a manufacturer of the first node, or is implementation-related. The following describes a typical but non-limiting implementation.

The first CSI indicates a first CSI-RS resource, and the P CSI-RS ports includes a port of the first CSI-RS resource in this application; or the first CSI indicates a first CSI-RS resource group, and the P CSI-RS ports includes ports of all CSI-RS resources in the first CSI-RS resource group in this application. The first node performs measurement on the P CSI-RS ports to obtain a channel parameter matrix *H*_{*r*×*P*}; and performs power adjustment on the channel parameter matrix *H*_{*r*×}*_{P}.* The adjusted channel parameter matrix is $\sqrt{Q} ⋅ {H}_{r \times P}$, where *Q* is the target power control offset (namely, a ratio of PDSCH EPRE to CSI-RS EPRE).Under the condition of using the precoding matrix *W*_{*P*×*l*}, a precoded channel parameter matrix is $\sqrt{P} ⋅ {H}_{r \times P} ⋅ {W}_{P \times l}$, where *l* is a rank (rank) or a quantity of layers. In one case, *l* is a positive integer not greater than *P.* In another case, the precoding matrix is an identity matrix, and in this case, *P = l*. An equivalent channel capacity of *H*_{*r*×*P*} · *W*_{*P*×*l*} is calculated by using criteria such as a SINR (Signal Interference Noise Ratio, signal interference noise ratio), EESM (Exponential Effective SINR Mapping, exponential effective SINR mapping), or an RBIR (Received Block mean mutual Information Ratio, received block mean mutual Information ratio). Then, the CQI in the first CSI is determined from the equivalent channel capacity through table lookup or the like.Generally, the calculation of the equivalent channel capacity requires the first node to estimate interference (including noise (noise)), and the first node can obtain interference through measurement of an RS resource in the second RS resource set in this application. Generally, direct mapping of the equivalent channel capacity to a value of the CQI depends on receiver performance or a hardware-related factor such as a modulation scheme.

In an embodiment, the target power control offset depending on whether P is greater than the number of ports of any CSI-RS resource in the first CSI-RS resource set includes: Which value in a plurality of values the target power control offset is depends on whether P is greater than the number of ports of any CSI-RS resource in the first CSI-RS resource set.

In an embodiment, the target power control offset depending on whether P is greater than the number of ports of any CSI-RS resource in the first CSI-RS resource set includes: Each CSI-RS resource in the first CSI-RS resource set is configured with a ratio of PDSCH EPRE to CSI-RS EPRE, and whether the target power control offset is equal to the ratio that is of PDSCH EPRE to CSI-RS EPRE and that is configured for any CSI-RS resource in the first CSI-RS resource set depends on whether P is greater than the number of ports of any CSI-RS resource in the first CSI-RS resource set. When P is equal to the number of ports of one CSI-RS resource in the first CSI-RS resource set, the target power control offset is equal to a ratio that is of PDSCH EPRE to CSI-RS EPRE and that is configured for a first CSI-RS resource, where the first CSI-RS resource is a CSI-RS resource in the first CSI-RS resource set. When P is greater than the number of ports of any CSI-RS resource in the first CSI-RS resource set, the target power control offset is equal to the ratio that is of PDSCH EPRE to CSI-RS EPRE and that is configured for any CSI-RS resource in the first CSI-RS resource set.

In an embodiment, the target power control offset depending on whether P is greater than the number of ports of any CSI-RS resource in the first CSI-RS resource set includes: Each CSI-RS resource in the first CSI-RS resource set is configured with two ratios of PDSCH EPRE to CSI-RS EPRE. The target power control offset means that two ratios of PDSCH EPRE to CSI-RS EPRE that are configured for one CSI-RS resource in the first CSI-RS resource set are respectively used for a case in which P is equal to the number of ports of one CSI-RS resource in the first CSI-RS resource set, and a case in which P is greater than the number of ports of any CSI-RS resource in the first CSI-RS resource set.

In an embodiment, the target power control offset depending on whether P is greater than the number of ports of any CSI-RS resource in the first CSI-RS resource set includes: Whether an IE indicating the target power control offset is an IE used to configure a CSI-RS resource depends on whether P is greater than the number of ports of any CSI-RS resource in the first CSI-RS resource set. When P is equal to the number of ports of one CSI-RS resource in the first CSI-RS resource set, the IE indicating the target power control offset is the IE used to configure the first CSI-RS resource, where the first CSI-RS resource is a CSI-RS resource in the first CSI-RS resource set. When P is greater than the number of ports of any CSI-RS resource in the first CSI-RS resource set, the IE indicating the target power control offset is different from any IE used to configure a CSI-RS resource.

In an embodiment, the target power control offset depending on whether P is greater than the number of ports of any CSI-RS resource in the first CSI-RS resource set includes: Whether an IE indicating the target power control offset is an IE used to configure a CSI-RS resource depends on whether P is greater than the number of ports of any CSI-RS resource in the first CSI-RS resource set. When P is equal to the number of ports of one CSI-RS resource in the first CSI-RS resource set, the IE indicating the target power control offset is an IE NZP-CSI-RS-Resource, where the first CSI-RS resource is a CSI-RS resource in the first CSI-RS resource set. When P is greater than the number of ports of any CSI-RS resource in the first CSI-RS resource set, the IE indicating the target power control offset is IE CSI-ReportConfig, or the IE indicating the target power control offset is IE CSI-ResourceConfig, or the IE indicating the target power control offset is an IE NZP-CSI-RS-ResourceSet.

In an embodiment, an IE used to configure a CSI-RS resource is an IE NZP-CSI-RS-Resource.

### Embodiment 6

Embodiment 6 illustrates a schematic diagram of CSI for P ports according to an embodiment of this application, as shown in FIG. 6.

In Embodiment 6, the CSI for P ports includes a PMI for P ports, and the CQI in the first CSI is calculated basedon at least a condition of the PMI in the first CSI.

In an embodiment, the CSI for P ports includes a PMI for P ports, where the PMI for P ports indicates a precoding matrix in a codebook for P ports.

In an embodiment, the CSI for P ports includes a PMI for P ports, where the PMI for P ports indicates a precoding matrix with a quantity of rows equal to the P.

Under the constraints of the foregoing methods or embodiments, how to calculate the CSI for P ports is determined independently by a manufacturer of the first node, or is implementation-related. The following describes a typical but non-limiting implementation.

The CSI for P ports includes a PMI for P ports. The first node performs measurement on the P CSI-RS ports to obtain a channel parameter matrix *H*_{*r*×*P*}; and performs power adjustment on the channel parameter matrix *H*_{*r*×}*_{P}.* The adjusted channel parameter matrix is $\sqrt{Q} ⋅ {H}_{r \times P}$, where *Q* is the target power control offset (namely, a ratio of PDSCH EPRE to CSI-RS EPRE).Under the condition of using the precoding matrix *W*_{*P*×}*ₗ,* a precoded channel parameter matrix is $\sqrt{P} ⋅ {H}_{r \times P} ⋅ {W}_{P \times l}$, where the PMI for P ports indicates *W*_{*P*×*l*}, and *l* is a rank (rank) or a quantity of layers. In one case, *l* is a positive integer not greater than *P.* In another case, the precoding matrix is an identity matrix, and in this case, *P = l*. An equivalent channel capacity of *H*_{*r*×*P*} · *W*_{*P*×*l*} is calculated by using criteria such as a SINR (Signal Interference Noise Ratio, signal interference noise ratio), EESM (Exponential Effective SINR Mapping, exponential effective SINR mapping), or an RBIR (Received Block mean mutual Information Ratio, received block mean mutual Information ratio). Then, the CQI in the CSI for P ports is determined from the equivalent channel capacity through table lookup or the like.

### Embodiment 7

Embodiment 7 illustrates a schematic diagram of a relationship between first CSI and P according to an embodiment of this application, as shown in FIG. 7. In FIG. 7, CSI-RS resource #1, ..., and CSI-RS resource #J are a plurality of CSI-RS resources in a first CSI-RS resource group.

In Embodiment 7, when P is equal to the number of ports of one CSI-RS resource in the first CSI-RS resource set, the first CSI indicates a first CSI-RS resource, and the first CSI-RS resource is a CSI-RS resource in the first CSI-RS resource set. When P is greater than the number of ports of any CSI-RS resource in the first CSI-RS resource set, the first CSI indicates a first CSI-RS resource group, the first CSI-RS resource group includes a plurality of CSI-RS resources in the first CSI-RS resource set, and a total number of ports of all CSI-RS resources in the first CSI-RS resource group is equal to the P.

In an embodiment, the first CSI is calculated based on channel measurement for P CSI-RS ports. When P is equal to the number of ports of one CSI-RS resource in the first CSI-RS resource set, the P CSI-RS ports are all ports of a first CSI-RS resource, the first CSI indicates the first CSI-RS resource, and the first CSI-RS resource is a CSI-RS resource in the first CSI-RS resource set. When P is greater than the number of ports of any CSI-RS resource in the first CSI-RS resource set, the first CSI indicates a first CSI-RS resource group, the P CSI-RS ports include all ports of all CSI-RS resources in the first CSI-RS resource group, the first CSI-RS resource group includes a plurality of CSI-RS resources in the first CSI-RS resource set, and a total number of ports of all the CSI-RS resources in the first CSI-RS resource group is equal to the P.

In an embodiment, when P is equal to the number of ports of any CSI-RS resource in the first CSI-RS resource set, the first CSI indicates a first CSI-RS resource, and the first CSI-RS resource is a CSI-RS resource in the first CSI-RS resource set. When P is greater than the number of ports of any CSI-RS resource in the first CSI-RS resource set, the first CSI indicates a first CSI-RS resource group, the first CSI-RS resource group includes a plurality of CSI-RS resources in the first CSI-RS resource set, and a total number of ports of all CSI-RS resources in the first CSI-RS resource group is equal to the P.

In an embodiment, the first CSI includes a first resource indication. When P is equal to the number of ports of one CSI-RS resource in the first CSI-RS resource set, the first resource indication indicates a first CSI-RS resource, and the first CSI-RS resource is a CSI-RS resource in the first CSI-RS resource set. When P is greater than the number of ports of any CSI-RS resource in the first CSI-RS resource set, the first resource indication indicates a first CSI-RS resource group, the first CSI-RS resource group includes a plurality of CSI-RS resources in the first CSI-RS resource set, and a total number of ports of all CSI-RS resources in the first CSI-RS resource group is equal to the P.

In an embodiment, the first resource indication indicating the first CSI-RS resource includes: The first resource indication indicates a CRI of the first CSI-RS resource.

In an embodiment, the first resource indication indicating the first CSI-RS resource group includes: The first resource indication indicates an index or identifier of the first CSI-RS resource group.

In an embodiment, the first resource indication indicating the first CSI-RS resource group includes: The first CSI-RS resource set includes a plurality of CSI-RS resource groups, the first CSI-RS resource group is one of the plurality of CSI-RS resource groups, and the first resource indication indicates an index or identifier of the first CSI-RS resource group.

In the foregoing method, the first resource indication indicates an index or identifier of the CSI-RS resource group, so that a design is simple and indication overheads are reduced.

In an embodiment, the first resource indication indicating the first CSI-RS resource group includes: The first resource indication includes a plurality of CRIs, and the plurality of CRIs respectively indicate a plurality of CSI-RS resources in the first CSI-RS resource group.

In the foregoing method, the first resource indication includes a plurality of CRIs, and the method for indicating a CSI-RS resource by using a CRI in the existing standard is used, which has good compatibility with the standard.

Under the constraints of the foregoing methods or embodiments, how to calculate the first CSI is determined independently by a manufacturer of the first node, or is implementation-related. The following describes a typical but non-limiting implementation.

The first node performs measurement on P CSI-RS ports to obtain a channel parameter matrix *H*_{*r*×}*_{P}.* When P is equal to the number of ports of one CSI-RS resource in the first CSI-RS resource set, the P CSI-RS ports are all ports of a first CSI-RS resource, the first CSI indicates the first CSI-RS resource, and the first CSI-RS resource is a CSI-RS resource in the first CSI-RS resource set. When P is greater than the number of ports of any CSI-RS resource in the first CSI-RS resource set, the first CSI indicates a first CSI-RS resource group, the P CSI-RS ports include all ports of all CSI-RS resources in the first CSI-RS resource group, the first CSI-RS resource group includes a plurality of CSI-RS resources in the first CSI-RS resource set, and a total number of ports of all the CSI-RS resources in the first CSI-RS resource group is equal to the P. Power adjustment is performed on the channel parameter matrix *H*_{*r*×}*_{P}.* The adjusted channel parameter matrix is $\sqrt{Q} ⋅ {H}_{r \times P}$, where *Q* is the target power control offset (namely, a ratio of PDSCH EPRE to CSI-RS EPRE).Under the condition of using the precoding matrix *W*_{*P*×}*ₗ,* a precoded channel parameter matrix is $\sqrt{P} ⋅ {H}_{r \times P} ⋅ {W}_{P \times l}$, where the PMI for P ports indicates *W*_{*P*×}*ₗ,* and *l* is a rank (rank) or a quantity of layers. In one case, *l* is a positive integer not greater than *P.* In another case, the precoding matrix is an identity matrix, and in this case, *P = l*. An equivalent channel capacity of *H*_{*r*×*P*} · *W*_{*P*×*l*} is calculated by using criteria such as a SINR (Signal Interference Noise Ratio, signal interference noise ratio), EESM (Exponential Effective SINR Mapping, exponential effective SINR mapping), or an RBIR (Received Block mean mutual Information Ratio, received block mean mutual Information ratio). Then, the CQI in the CSI for P ports is determined from the equivalent channel capacity through table lookup or the like.

### Embodiment 8

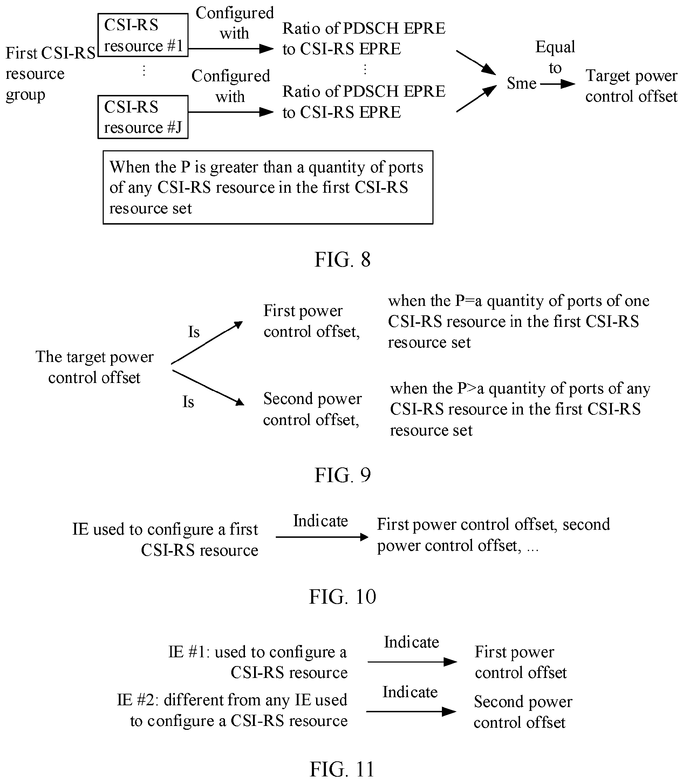

Embodiment 8 illustrates a schematic diagram of a relationship between a target power control offset and P according to an embodiment of this application, as shown in FIG. 8. In FIG. 8, CSI-RS resource #1, ..., and CSI-RS resource #J are a plurality of CSI-RS resources in a first CSI-RS resource group.

In Embodiment 8, when P is greater than the number of ports of any CSI-RS resource in the first CSI-RS resource set, ratios of PDSCH EPRE to CSI-RS EPRE that are respectively configured for any two CSI-RS resources in the first CSI-RS resource group are the same, the first CSI-RS resource group includes a plurality of CSI-RS resources in the first CSI-RS resource set, and the target power control offset is equal to a ratio that is of PDSCH EPRE to CSI-RS EPRE and that is configured for any CSI-RS resource in the first CSI-RS resource group.

In an embodiment, when P is equal to the number of ports of one CSI-RS resource in the first CSI-RS resource set, a ratio that is of PDSCH EPRE to CSI-RS EPRE and that is configured for each CSI-RS resource in the first CSI-RS resource set is determined independently by a sending party of the first CSI reporting configuration, and the target power control offset is equal to a ratio that is of PDSCH EPRE to CSI-RS EPRE and that is configured for the first CSI-RS resource, where the first CSI-RS resource is a CSI-RS resource in the first CSI-RS resource set.

In an embodiment, when P is equal to the number of ports of one CSI-RS resource in the first CSI-RS resource set, whether ratios of PDSCH EPRE to CSI-RS EPRE that are respectively configured for different CSI-RS resources in the first CSI-RS resource set are the same is determined independently by a sending party of the first CSI reporting configuration, and the target power control offset is equal to a ratio that is of PDSCH EPRE to CSI-RS EPRE and that is configured for the first CSI-RS resource, where the first CSI-RS resource is a CSI-RS resource in the first CSI-RS resource set.

In an embodiment, when P is equal to the number of ports of one CSI-RS resource in the first CSI-RS resource set, ratios of PDSCH EPRE to CSI-RS EPRE that are respectively configured for any two CSI-RS resources in the first CSI-RS resource set are not necessarily the same, and the target power control offset is equal to a ratio that is of PDSCH EPRE to CSI-RS EPRE and that is configured for the first CSI-RS resource, where the first CSI-RS resource is a CSI-RS resource in the first CSI-RS resource set.

In an embodiment, when P is equal to the number of ports of one CSI-RS resource in the first CSI-RS resource set, ratios of PDSCH EPRE to CSI-RS EPRE that are respectively configured for any two CSI-RS resources in the first CSI-RS resource set may be the same or different, and the target power control offset is equal to a ratio that is of PDSCH EPRE to CSI-RS EPRE and that is configured for the first CSI-RS resource, where the first CSI-RS resource is a CSI-RS resource in the first CSI-RS resource set.

In an embodiment, when P is equal to the number of ports of one CSI-RS resource in the first CSI-RS resource set, a sending party of the first CSI reporting configuration may configure a same ratio of PDSCH EPRE to CSI-RS EPRE for two CSI-RS resources in the first CSI-RS resource set, or the sending party of the first CSI reporting configuration may configure different ratios of PDSCH EPRE to CSI-RS EPRE for two CSI-RS resources in the first CSI-RS resource set, and the target power control offset is equal to a ratio that is of PDSCH EPRE to CSI-RS EPRE and that is configured for a first CSI-RS resource, where the first CSI-RS resource is a CSI-RS resource in the first CSI-RS resource set.

In an embodiment, an IE used to configure a CSI-RS resource indicates at least one ratio that is of PDSCH EPRE to CSI-RS EPRE and that is configured for the CSI-RS resource.

In an embodiment, when P is greater than the number of ports of any CSI-RS resource in the first CSI-RS resource set, the ratios of PDSCH EPRE to CSI-RS EPRE that are respectively configured for any two CSI-RS resources in the first CSI-RS resource group being the same means the following: When P is greater than the number of ports of any CSI-RS resource in the first CSI-RS resource set, the first node expects the ratios of PDSCH EPRE to CSI-RS EPRE that are respectively configured for any two CSI-RS resources in the first CSI-RS resource group to be the same.

In an embodiment, when P is greater than the number of ports of any CSI-RS resource in the first CSI-RS resource set, the ratios of PDSCH EPRE to CSI-RS EPRE that are respectively configured for any two CSI-RS resources in the first CSI-RS resource group being the same means the following: When P is greater than the number of ports of any CSI-RS resource in the first CSI-RS resource set, the first node does not expect ratios of PDSCH EPRE to CSI-RS EPRE that are respectively configured for two CSI-RS resources in the first CSI-RS resource group to be different.

In an embodiment, the first CSI-RS resource group includes some or all CSI-RS resources in the first CSI-RS resource set.

In an embodiment, the first CSI-RS resource group is the first CSI-RS resource set.

In an embodiment, the first CSI-RS resource group is the first CSI-RS resource set, and the first CSI does not include a CRI.

In an embodiment, the first CSI-RS resource group is the first CSI-RS resource set, and the first CSI does not include a reporting quantity indicating the CSI-RS resource.

In an embodiment, the first CSI-RS resource group includes some CSI-RS resources in the first CSI-RS resource set.

In an embodiment, the first CSI-RS resource set includes a plurality of CSI-RS resource groups, and the first CSI-RS resource group is one of the plurality of CSI-RS resource groups.

In an embodiment, the first CSI includes a first resource indication, and the first resource indication indicates the first CSI-RS resource group. The first CSI-RS resource set includes a plurality of CSI-RS resource groups, and the first CSI-RS resource group is one of the plurality of CSI-RS resource groups.

In an embodiment, when P is greater than the number of ports of any CSI-RS resource in the first CSI-RS resource set, the first CSI indicates a first CSI-RS resource group, where the first CSI-RS resource group includes a plurality of CSI-RS resources in the first CSI-RS resource set, and P is equal to a total number of ports of all CSI-RS resources in the first CSI-RS resource group. When P is greater than the number of ports of any CSI-RS resource in the first CSI-RS resource set, ratios of PDSCH EPRE to CSI-RS EPRE that are respectively configured for any two CSI-RS resources in the first CSI-RS resource group are the same, and the target power control offset is equal to a ratio that is of PDSCH EPRE to CSI-RS EPRE and that is configured for any CSI-RS resource in the first CSI-RS resource group.

In an embodiment, each CSI-RS resource in the first CSI-RS resource set is configured with a ratio of PDSCH EPRE to CSI-RS EPRE, and ratios of PDSCH EPRE to CSI-RS EPRE that are respectively configured for any two CSI-RS resources in the first CSI-RS resource group are the same.

In an embodiment, each CSI-RS resource in the first CSI-RS resource set is configured with a ratio of PDSCH EPRE to CSI-RS EPRE, the first CSI-RS resource set includes a plurality of CSI-RS resource groups, and ratios of PDSCH EPRE to CSI-RS EPRE that are respectively configured for any two CSI-RS resources in a same CSI-RS resource group in the first CSI-RS resource set are the same.

In an embodiment, the ratios of PDSCH EPRE to CSI-RS EPRE that are respectively configured for any two CSI-RS resources in the same CSI-RS resource group in the first CSI-RS resource set being the same means the following: The first node expects the ratios of PDSCH EPRE to CSI-RS EPRE that are respectively configured for any two CSI-RS resources in the same CSI-RS resource group in the first CSI-RS resource set to be the same.

In an embodiment, the ratios of PDSCH EPRE to CSI-RS EPRE that are respectively configured for any two CSI-RS resources in the same CSI-RS resource group in the first CSI-RS resource set being the same means the following: The first node does not expect ratios of PDSCH EPRE to CSI-RS EPRE that are respectively configured for any two CSI-RS resources in a CSI-RS resource group in the first CSI-RS resource set to be different.

### Embodiment 9

Embodiment 9 illustrates a schematic diagram of a relationship between a target power control offset and P according to another embodiment of this application, as shown in FIG. 9.

In Embodiment 9, when P is equal to the number of ports of one CSI-RS resource in the first CSI-RS resource set, the target power control offset is a first power control offset; or when P is greater than the number of ports of any CSI-RS resource in the first CSI-RS resource set, the target power control offset is a second power control offset.

In an embodiment, when P is equal to the number of ports of any CSI-RS resource in the first CSI-RS resource set, the target power control offset is a first power control offset; or when P is greater than the number of ports of any CSI-RS resource in the first CSI-RS resource set, the target power control offset is a second power control offset.

In an embodiment, the first power control offset and the second power control offset are respectively configured.

In an embodiment, the first power control offset and the second power control offset are different.

In an embodiment, the first power control offset and the second power control offset are configured by different higher layer parameters.

In an embodiment, the first power control offset and the second power control offset are configured by a same IE.

In an embodiment, the first power control offset and the second power control offset are respectively configured by different IEs.

In an embodiment, the first power control offset and the second power control offset are respectively configured by IEs with different names.

### Embodiment 10

Embodiment 10 illustrates a schematic diagram of a second power control offset according to an embodiment of this application, as shown in FIG. 10.

In Embodiment 10, an IE used to configure a first CSI-RS resource indicates the first power control offset and the second power control offset, where the first CSI-RS resource is a CSI-RS resource in the first CSI-RS resource set.

In an embodiment, when P is equal to the number of ports of one CSI-RS resource in the first CSI-RS resource set, the target power control offset is the first power control offset, and the first CSI indicates a first CSI-RS resource, where the first CSI-RS resource is a CSI-RS resource in the first CSI-RS resource set. When P is greater than the number of ports of any CSI-RS resource in the first CSI-RS resource set, the target power control offset is the second power control offset, and the first CSI indicates a first CSI-RS resource group, where the first CSI-RS resource group includes a plurality of CSI-RS resources in the first CSI-RS resource set, and a total number of ports of all CSI-RS resources in the first CSI-RS resource group is equal to the P. The first CSI-RS resource is a CSI-RS resource in the first CSI-RS resource group, and an IE used to configure the first CSI-RS resource indicates the first power control offset and the second power control offset.

In an embodiment, the IE used to configure the first CSI-RS resource indicating the first power control offset and the second power control offset includes: The IE used to configure the first CSI-RS resource includes two fields, and the two fields respectively indicate the first power control offset and the second power control offset.

In an embodiment, the IE used to configure the first CSI-RS resource indicating the first power control offset and the second power control offset includes: The IE used to configure the first CSI-RS resource includes two fields, where one of the two fields indicates the first power control offset, and the other of the two fields indicates a first offset value. The first offset value is a real number or an integer, and the second power control offset is equal to a sum of the first offset value and the first power control offset; or the second power control offset is equal to the first power control offset minus the first offset value. The first power control offset, the second power control offset, and the first offset value are all in units of dB.

In an embodiment, the IE used to configure the first CSI-RS resource indicates the first power control offset.

In an embodiment, an IE NZP-CSI-RS-Resource used to configure the first CSI-RS resource indicates the first power control offset.

In an embodiment, the IE used to configure the first CSI-RS resource is an IE NZP-CSI-RS-Resource.

In an embodiment, both the first power control offset and the second power control offset are configured for the first CSI-RS resource.

In an embodiment, the first power control offset and the second power control offset are indicated by a same IE.

### Embodiment 11

Embodiment 11 illustrates a schematic diagram of a second power control offset according to another embodiment of this application, as shown in FIG. 11. In FIG. 11, an IE #1 and an IE #2 are two IEs.

In Embodiment 11, the first power control offset and the second power control offset are respectively indicated by two IEs, the IE indicating the first power control offset is used to configure a CSI-RS resource, and the IE indicating the second power control offset is different from any IE used to configure a CSI-RS resource.

In an embodiment, the IE indicating the first power control offset being used to configure a CSI-RS resource means that the IE indicating the first power control offset is an IE NZP-CSI-RS-Resource.

In an embodiment, the IE indicating the second power control offset being different from any IE used to configure a CSI-RS resource includes the first CSI reporting configuration.

In an embodiment, the IE indicating the second power control offset being different from any IE used to configure a CSI-RS resource includes the first CSI resource configuration, where the first CSI resource configuration indicates the first CSI-RS resource set.

In an embodiment, the IE indicating the second power control offset being different from any IE used to configure a CSI-RS resource includes an IE used to configure the first CSI-RS resource set.

In an embodiment, the IE indicating the second power control offset being different from any IE used to configure a CSI-RS resource includes the first CSI reporting configuration, where the first CSI reporting configuration is an IE CSI-ReportConfig.

In an embodiment, the IE indicating the second power control offset being different from any IE used to configure a CSI-RS resource includes the first CSI resource configuration, where the first CSI resource configuration is an IE CSI-ResourceConfig, and the first CSI resource configuration indicates the first CSI-RS resource set.

In an embodiment, the IE indicating the second power control offset being different from any IE used to configure a CSI-RS resource includes an IE NZP-CSI-RS-ResourceSet used to configure the first CSI-RS resource set.

### Embodiment 12

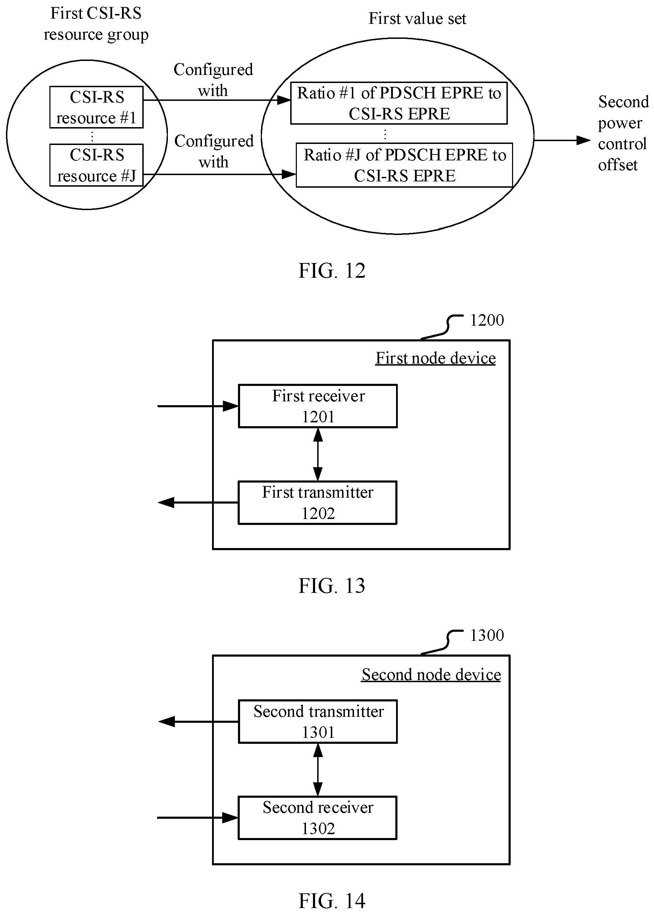

Embodiment 12 illustrates a schematic diagram of a second power control offset according to another embodiment of this application, as shown in FIG. 12. In FIG. 12, CSI-RS resource #1, ..., and CSI-RS resource #J are a plurality of CSI-RS resources in a first CSI-RS resource group.

In Embodiment 12, each CSI-RS resource in the first CSI-RS resource set is configured with a ratio of PDSCH EPRE to CSI-RS EPRE; when P is greater than the number of ports of any CSI-RS resource in the first CSI-RS resource set, a first value set includes a ratio that is of PDSCH EPRE to CSI-RS EPRE and that is configured for each CSI-RS resource in the first CSI-RS resource group, and the first CSI-RS resource group includes a plurality of CSI-RS resources in the first CSI-RS resource set; and the second power control offset is a value in the first value set, or the second power control offset depends on the first value set.

In an embodiment, a ratio of PDSCH EPRE to CSI-RS EPRE is in units of dB (decibel).

In an embodiment, a ratio of PDSCH EPRE to CSI-RS EPRE is a real number.

In an embodiment, a ratio of PDSCH EPRE to CSI-RS EPRE is an integer, and a ratio of PDSCH EPRE to CSI-RS EPRE is in units of dB.

In an embodiment, a value range of a ratio of PDSCH EPRE to CSI-RS EPRE includes [-8, 15] dB and a step size (step size) is 1 dB.

In an embodiment, the first CSI-RS resource group includes some or all CSI-RS resources in the first CSI-RS resource set.

In an embodiment, the first CSI-RS resource group is the first CSI-RS resource set.

In an embodiment, the first CSI-RS resource group is the first CSI-RS resource set, and the first CSI does not include a CRI.

In an embodiment, the first CSI-RS resource group is the first CSI-RS resource set, and the first CSI does not include a reporting quantity indicating the CSI-RS resource.

In an embodiment, the first CSI-RS resource group includes some CSI-RS resources in the first CSI-RS resource set.

In an embodiment, the first CSI includes a first resource indication, and the first resource indication indicates the first CSI-RS resource group. The first CSI-RS resource set includes a plurality of CSI-RS resource groups, and the first CSI-RS resource group is one of the plurality of CSI-RS resource groups.

In an embodiment, the second power control offset is a minimum value in the first value set.

In an embodiment, the second power control offset depending on the first value set includes: The second power control offset is the minimum value in the first value set.

In the foregoing method, by calculating the CQI using minimum powerControlOffset in the first value set, most reliable transmission can be achieved.

In an embodiment, the second power control offset is a maximum value in the first value set.

In an embodiment, the second power control offset depending on the first value set includes: The second power control offset is the maximum value in the first value set.

In the foregoing method, by calculating the CQI using maximum powerControlOffset in the first value set, transmission with a maximum capacity can be achieved.

In an embodiment, the second power control offset is an average value in the first value set.

In an embodiment, the second power control offset depending on the first value set includes: The second power control offset is the average value in the first value set.

In the foregoing method, by calculating the CQI using an average value of all powerControlOffset in the first value set, reliability and capacity are taken into account comprehensively.

In an embodiment, the second power control offset is a ratio that is of PDSCH EPRE to CSI-RS EPRE and that is configured for a first CSI-RS resource in the first value set, where the first CSI-RS resource is one CSI-RS resource in the first CSI-RS resource group.

In an embodiment, the second power control offset depending on the first value set includes: The second power control offset is the ratio that is of PDSCH EPRE to CSI-RS EPRE and that is configured for the first CSI-RS resource, where the first CSI-RS resource is a CSI-RS resource in the first CSI-RS resource group.

In an embodiment, the second power control offset is a ratio that is of PDSCH EPRE to CSI-RS EPRE and that is configured for a second CSI-RS resource in the first value set, where the second CSI-RS resource is one CSI-RS resource in the first CSI-RS resource group.

In an embodiment, the second power control offset depending on the first value set includes: The second power control offset is the ratio that is of PDSCH EPRE to CSI-RS EPRE and that is configured for the second CSI-RS resource, where the second CSI-RS resource is a CSI-RS resource in the first CSI-RS resource group.

In the foregoing method, by calculating the CQI using powerControlOffset configured for a CSI-RS resource in the first CSI-RS resource group, which is similar to powerControlOffset being configured for a CSI-RS resource in the standard, compatibility with the standard is good.

In an embodiment, the second power control offset is a ratio that is of PDSCH EPRE to CSI-RS EPRE and that is configured for a second CSI-RS resource in the first value set, where the second CSI-RS resource is an initial CSI-RS resource in the first CSI-RS resource group.

In an embodiment, the second power control offset depending on the first value set includes: The second power control offset is the ratio that is of PDSCH EPRE to CSI-RS EPRE and that is configured for the second CSI-RS resource, where the second CSI-RS resource is the initial CSI-RS resource in the first CSI-RS resource group.

In the foregoing method, by calculating the CQI is calculated using powerControlOffset configured for the second CSI-RS resource, which is similar to the powerControlOffset being configured for a CSI-RS resource in the standard, compatibility with the standard is good. By selecting the second CSI-RS resource as the initial CSI-RS resource in the first CSI-RS resource group, a design is simplified, a modification to the standard is slight.

In an embodiment, the second power control offset is a ratio, in the first value set, that is of PDSCH EPRE to CSI-RS EPRE and that is configured for a second CSI-RS resource, where the second CSI-RS resource is a CSI-RS resource with a minimum index or identifier in the first CSI-RS resource group.

In an embodiment, the second power control offset depending on the first value set includes: The second power control offset is the ratio, in the first value set, that is of PDSCH EPRE to CSI-RS EPRE and that is configured for the second CSI-RS resource, where the second CSI-RS resource is the CSI-RS resource with the minimum index or identifier in the first CSI-RS resource group.

In the foregoing method, by calculating the CQI using powerControlOffset configured for the second CSI-RS resource, which is similar to the powerControlOffset being configured for a CSI-RS resource in the standard, compatibility with the standard is good. By selecting the second CSI-RS resource as the CSI-RS resource with the minimum index or identifier in the first CSI-RS resource group, a design is simplified, a modification to the standard is slight.

In an embodiment, the second power control offset is a ratio, in the first value set, that is of PDSCH EPRE to CSI-RS EPRE and that is configured for a second CSI-RS resource, where the second CSI-RS resource is a CSI-RS resource with a maximum index or identifier in the first CSI-RS resource group.

In an embodiment, the second power control offset depending on the first value set includes: The second power control offset is the ratio, in the first value set, that is of PDSCH EPRE to CSI-RS EPRE and that is configured for the second CSI-RS resource, where the second CSI-RS resource is the CSI-RS resource with the maximum index or identifier in the first CSI-RS resource group.

In the foregoing method, by calculating the CQI using powerControlOffset configured for the second CSI-RS resource, which is similar to the powerControlOffset being configured for a CSI-RS resource in the standard, compatibility with the standard is good. By selecting the second CSI-RS resource as the CSI-RS resource with the maximum index or identifier in the first CSI-RS resource group, a design is simplified, a modification to the standard is slight.

### Embodiment 13

Embodiment 13 illustrates a block diagram of a structure of a processing apparatus in a first node device according to an embodiment of this application, as shown in FIG. 13. In FIG. 13, the processing apparatus 1200 in the first node device includes a first receiver 1201 and a first transmitter 1202.

In an embodiment, the first node device is a user equipment.

In an embodiment, the first node device is a relay node device.

In an embodiment, the first receiver 1201 includes at least one of {the antenna 452, the receiving unit 454, the receive processor 456, the multi-antenna receive processor 458, the controller/processor 459, the memory 460, and the data source 467} in Embodiment 4.

In an embodiment, the first transmitter 1202 includes at least one of {the antenna 452, the transmitter 454, the transmit processor 468, the multi-antenna transmit processor 457, the controller/processor 459, the memory 460, and the data source 467} in Embodiment 4.

The first receiver 1201 receives a first CSI reporting configuration, where the first CSI reporting configuration indicates a first CSI-RS resource set for channel measurement, and the first CSI-RS resource set includes a plurality of CSI-RS resources; and the first CSI reporting configuration is used to configure reporting for CSI with P ports, where P is a positive integer greater than 1.

The first transmitter 1202 sends first CSI, where the first CSI is the CSI for P ports configured by the first CSI reporting configuration.

In Embodiment 13, the first CSI includes a CQI, and a target power control offset is a ratio that is of PDSCH EPRE to CSI-RS EPRE and that is used for calculating the CQI in the first CSI; and the target power control offset depends on whether P is greater than the number of ports of any CSI-RS resource in the first CSI-RS resource set.

In an embodiment, the CSI for P ports includes a PMI and a CQI for P ports, where the CQI in the first CSI is calculated conditioned on at least the PMI in the first CSI.

In an embodiment, when P is equal to the number of ports of one CSI-RS resource in the first CSI-RS resource set, the first CSI indicates a first CSI-RS resource, where the first CSI-RS resource is a CSI-RS resource in the first CSI-RS resource set. When P is greater than the number of ports of any CSI-RS resource in the first CSI-RS resource set, the first CSI indicates a first CSI-RS resource group, where the first CSI-RS resource group includes a plurality of CSI-RS resources in the first CSI-RS resource set, and a total number of ports of all CSI-RS resources in the first CSI-RS resource group is equal to the P.

In an embodiment, when P is greater than the number of ports of any CSI-RS resource in the first CSI-RS resource set, ratios of PDSCH EPRE to CSI-RS EPRE that are respectively configured for any two CSI-RS resources in the first CSI-RS resource group are the same, the first CSI-RS resource group includes a plurality of CSI-RS resources in the first CSI-RS resource set, and the target power control offset is equal to a ratio that is of PDSCH EPRE to CSI-RS EPRE and that is configured for any CSI-RS resource in the first CSI-RS resource group.

In an embodiment, when P is equal to the number of ports of one CSI-RS resource in the first CSI-RS resource set, the target power control offset is a first power control offset; or when P is greater than the number of ports of any CSI-RS resource in the first CSI-RS resource set, the target power control offset is a second power control offset.

In an embodiment, the first power control offset and the second power control offset are respectively indicated by two IEs, the IE indicating the first power control offset is used to configure a CSI-RS resource, and the IE indicating the second power control offset is different from any IE used to configure a CSI-RS resource.

In an embodiment, each CSI-RS resource in the first CSI-RS resource set is configured with a ratio of PDSCH EPRE to CSI-RS EPRE; when P is greater than the number of ports of any CSI-RS resource in the first CSI-RS resource set, a first value set includes a ratio that is of PDSCH EPRE to CSI-RS EPRE and that is configured for each CSI-RS resource in the first CSI-RS resource group, and the first CSI-RS resource group includes a plurality of CSI-RS resources in the first CSI-RS resource set; and the second power control offset is a value in the first value set, or the second power control offset depends on the first value set.

### Embodiment 14

Embodiment 14 illustrates a block diagram of a structure of a processing apparatus in a second node device according to an embodiment of this application, as shown in FIG. 14. In FIG. 14, the processing apparatus 1300 in the second node device includes a second transmitter 1301 and a second receiver 1302.

In an embodiment, the second node device is a base station device.

In an embodiment, the second node device is a user equipment.

In an embodiment, the second node device is a relay node device.

In an embodiment, the second transmitter 1301 includes at least one of {the antenna 420, the transmitter 418, the transmit processor 416, the multi-antenna transmit processor 471, the controller/processor 475, and the memory 476} in Embodiment 4.

In an embodiment, the second receiver 1302 includes at least one of {the antenna 420, the receiving unit 418, the receive processor 470, the multi-antenna receive processor 472, the controller/processor 475, and the memory 476} in Embodiment 4.

The second transmitter 1301 sends a first CSI reporting configuration, where the first CSI reporting configuration indicates a first CSI-RS resource set for channel measurement, and the first CSI-RS resource set includes a plurality of CSI-RS resources; and the first CSI reporting configuration is used to configure reporting for CSI with P ports, where P is a positive integer greater than 1.

The second receiver 1302 receives first CSI, where the first CSI is the CSI for P ports configured by the first CSI reporting configuration.

In Embodiment 14, the first CSI includes a CQI, and a target power control offset is a ratio that is of PDSCH EPRE to CSI-RS EPRE and that is used for calculating the CQI in the first CSI; and the target power control offset depends on whether P is greater than the number of ports of any CSI-RS resource in the first CSI-RS resource set.

In an embodiment, the CSI for P ports includes a PMI and a CQI for P ports, where the CQI in the first CSI is calculated conditioned on at least the PMI in the first CSI.

In an embodiment, when P is equal to the number of ports of one CSI-RS resource in the first CSI-RS resource set, the first CSI indicates a first CSI-RS resource, where the first CSI-RS resource is a CSI-RS resource in the first CSI-RS resource set. When P is greater than the number of ports of any CSI-RS resource in the first CSI-RS resource set, the first CSI indicates a first CSI-RS resource group, where the first CSI-RS resource group includes a plurality of CSI-RS resources in the first CSI-RS resource set, and a total number of ports of all CSI-RS resources in the first CSI-RS resource group is equal to the P.

In an embodiment, when P is greater than the number of ports of any CSI-RS resource in the first CSI-RS resource set, ratios of PDSCH EPRE to CSI-RS EPRE that are respectively configured for any two CSI-RS resources in the first CSI-RS resource group are the same, the first CSI-RS resource group includes a plurality of CSI-RS resources in the first CSI-RS resource set, and the target power control offset is equal to a ratio that is of PDSCH EPRE to CSI-RS EPRE and that is configured for any CSI-RS resource in the first CSI-RS resource group.

In an embodiment, when P is equal to the number of ports of one CSI-RS resource in the first CSI-RS resource set, the target power control offset is a first power control offset; or when P is greater than the number of ports of any CSI-RS resource in the first CSI-RS resource set, the target power control offset is a second power control offset.

In an embodiment, the first power control offset and the second power control offset are respectively indicated by two IEs, the IE indicating the first power control offset is used to configure a CSI-RS resource, and the IE indicating the second power control offset is different from any IE used to configure a CSI-RS resource.

In an embodiment, each CSI-RS resource in the first CSI-RS resource set is configured with a ratio of PDSCH EPRE to CSI-RS EPRE; when P is greater than the number of ports of any CSI-RS resource in the first CSI-RS resource set, a first value set includes a ratio that is of PDSCH EPRE to CSI-RS EPRE and that is configured for each CSI-RS resource in the first CSI-RS resource group, and the first CSI-RS resource group includes a plurality of CSI-RS resources in the first CSI-RS resource set; and the second power control offset is a value in the first value set, or the second power control offset depends on the first value set.

A person of ordinary skill in the art may understand that all or some steps of the foregoing methods may be implemented by a program instructing relevant hardware. The program may be stored in a computer-readable storage medium, such as a read-only memory, a hard disk, or an optical disc. Optionally, all or some of the steps in the foregoing embodiments may alternatively be implemented by using one or more integrated circuits. Correspondingly, each module unit in the foregoing embodiments may be implemented in a form of hardware, or may be implemented in a form of a software functional module. This application is not limited to any specific combination of software and hardware. The user equipment, the terminal, and the UE in this application include but are not limited to wireless communication devices such as a drone, a communication module on a drone, a remote-controlled aircraft, a flight vehicle, a small aircraft, a mobile phone, a tablet computer, a notebook computer, a vehicle-mounted communication device, a wireless sensor, a USB dongle, an Internet of things terminal, an RFID terminal, an NB-IOT terminal, an MTC (Machine Type Communication, machine type communication) terminal, an eMTC (enhanced MTC, enhanced MTC) terminal, a data card, a USB dongle, a vehicle-mounted communication device, a low-cost mobile phone, and a low-cost tablet computer. The base station or system device in this application includes but is not limited to a wireless communication device such as a macro cellular base station, a micro cellular base station, a home base station, a relay base station, a gNB (NR NodeB) NR NodeB, or a TRP (Transmitter Receiver Point, transmission-reception point).

The foregoing descriptions are merely example embodiments of this application, and are not intended to limit the protection scope of this application. Any changes and modifications made based on the embodiments described in the specification should be considered obvious and fall within the protection scope of the present invention, provided that these changes and modifications can achieve some or all similar technical effects.

## Claims

1. A first node device used for wireless communication, comprising:
a first receiver, receiving a first CSI reporting configuration, wherein the first CSI reporting configuration indicates a first CSI-RS resource set for channel measurement, and the first CSI-RS resource set comprises a plurality of CSI-RS resources; and the first CSI reporting configuration is used to configure reporting for CSI with P ports, wherein P is a positive integer greater than 1; and
a first transmitter, sending first CSI, wherein the first CSI is the CSI for P ports configured by the first CSI reporting configuration, wherein
the first CSI comprises a CQI, and a target power control offset is a ratio that is of PDSCH EPRE to CSI-RS EPRE and that is used for calculating the CQI in the first CSI; and the target power control offset depends on whether P is greater than the number of ports of any CSI-RS resource in the first CSI-RS resource set.

2. The first node device according to claim 1, wherein the CSI for P ports comprises a PMI for P ports, and the CQI in the first CSI is calculated conditioned on at least the PMI in the first CSI.

3. The first node device according to claim 1 or 2, wherein, when P is equal to the number of ports of one CSI-RS resource in the first CSI-RS resource set, the first CSI indicates a first CSI-RS resource, and the first CSI-RS resource is a CSI-RS resource in the first CSI-RS resource set; or when P is greater than the number of ports of any CSI-RS resource in the first CSI-RS resource set, the first CSI indicates a first CSI-RS resource group, the first CSI-RS resource group comprises a plurality of CSI-RS resources in the first CSI-RS resource set, and a total number of ports of all CSI-RS resources in the first CSI-RS resource group is equal to the P

4. The first node device according to any one of claims 1 to 3, wherein when P is greater than the number of ports of any CSI-RS resource in the first CSI-RS resource set, ratios of PDSCH EPRE to CSI-RS EPRE that are respectively configured for any two CSI-RS resources in the first CSI-RS resource group are the same, the first CSI-RS resource group comprises a plurality of CSI-RS resources in the first CSI-RS resource set, and the target power control offset is equal to a ratio that is of PDSCH EPRE to CSI-RS EPRE and that is configured for any CSI-RS resource in the first CSI-RS resource group.

5. The first node device according to any one of claims 1 to 3, wherein when P is equal to the number of ports of one CSI-RS resource in the first CSI-RS resource set, the target power control offset is a first power control offset; or when P is greater than the number of ports of any CSI-RS resource in the first CSI-RS resource set, the target power control offset is a second power control offset.

6. The first node device according to claim 5, wherein the first power control offset and the second power control offset are respectively indicated by two IEs, the IE indicating the first power control offset is used to configure a CSI-RS resource, and the IE indicating the second power control offset is different from any IE used to configure a CSI-RS resource.

7. The first node device according to claim 5, wherein each CSI-RS resource in the first CSI-RS resource set is configured with a ratio of PDSCH EPRE to CSI-RS EPRE; when P is greater than the number of ports of any CSI-RS resource in the first CSI-RS resource set, a first value set comprises a ratio that is of PDSCH EPRE to CSI-RS EPRE and that is configured for each CSI-RS resource in the first CSI-RS resource group, and the first CSI-RS resource group comprise a plurality of CSI-RS resources in the first CSI-RS resource set; and the second power control offset is a value in the first value set, or the second power control offset depends on the first value set.

8. A second node device used for wireless communication, comprising:
a second transmitter, sending a first CSI reporting configuration, wherein the first CSI reporting configuration indicates a first CSI-RS resource set for channel measurement, and the first CSI-RS resource set comprises a plurality of CSI-RS resources; and the first CSI reporting configuration is used to configure reporting for CSI with P ports, wherein P is a positive integer greater than 1; and
a second receiver, receiving first CSI, wherein the first CSI is the CSI for P ports configured by the first CSI reporting configuration, wherein
the first CSI comprises a CQI, and a target power control offset is a ratio that is of PDSCH EPRE to CSI-RS EPRE and that is used for calculating the CQI in the first CSI; and the target power control offset depends on whether P is greater than the number of ports of any CSI-RS resource in the first CSI-RS resource set.

9. A method in a first node used for wireless communication, comprising:
receiving a first CSI reporting configuration, wherein the first CSI reporting configuration indicates a first CSI-RS resource set for channel measurement, and the first CSI-RS resource set comprises a plurality of CSI-RS resources; and the first CSI reporting configuration is used to configure reporting for CSI with P ports, wherein P is a positive integer greater than 1; and
sending first CSI, wherein the first CSI is the CSI for P ports configured by the first CSI reporting configuration, wherein
the first CSI comprises a CQI, and a target power control offset is a ratio that is of PDSCH EPRE to CSI-RS EPRE and that is used for calculating the CQI in the first CSI; and the target power control offset depends on whether P is greater than the number of ports of any CSI-RS resource in the first CSI-RS resource set.

10. A method in a second node used for wireless communication, comprising:
sending a first CSI reporting configuration, wherein the first CSI reporting configuration indicates a first CSI-RS resource set for channel measurement, and the first CSI-RS resource set comprises a plurality of CSI-RS resources; and the first CSI reporting configuration is used to configure reporting for CSI with P ports, wherein P is a positive integer greater than 1; and
receiving first CSI, wherein the first CSI is the CSI for P ports configured by the first CSI reporting configuration, wherein
the first CSI comprises a CQI, and a target power control offset is a ratio that is of PDSCH EPRE to CSI-RS EPRE and that is used for calculating the CQI in the first CSI; and the target power control offset depends on whether P is greater than the number of ports of any CSI-RS resource in the first CSI-RS resource set.
